# EUROPÄISCHE PATENTSCHRIFT

(11) **EP 4 117 810 B1**
(45) Veröffentlichungstag und Bekanntmachung des Hinweises auf die Patenterteilung: **31.01.2024**
(21) Anmeldenummer: 21710017.1
(22) Anmeldetag: 11.03.2021
(51) Int. Cl.: B01J 8/06, C01B 3/34

(54) **REAKTOR UND VERFAHREN ZUR DURCHFÜHRUNG EINER CHEMISCHEN REAKTION**
REACTOR AND METHOD FOR PERFORMING A CHEMICAL REACTION
RÉACTEUR ET PROCÉDÉ DE RÉALISATION D'UNE RÉACTION CHIMIQUE

(30) Priorität: 13.03.2020 EP 20163140
(43) Veröffentlichungstag der Anmeldung: 18.01.2023
(73) Patentinhaber: Linde GmbH, 82049 Pullach (DE); BASF SE, 67056 Ludwigshafen am Rhein (DE)
(72) Erfinder: ZELLHUBER, Mathieu, 82152 Martinsried (DE); HOFSTÄTTER, Martin, 81369 München (DE); POSSELT, Heinz, 83043 Bad Aibling (DE); LANG, Christian, 81479 München (DE); STEGEMANN, Robert, 81543 München (DE); WELLENHOFER, Anton, 82069 Hohenschäftlarn (DE); JEROMIN, Volker, 83352 Altenmarkt a. d. Alz (DE); REISER, Peter, 82541 Münsing (DE); KIESE, Georg, 85604 Zorneding (DE); ZIEGLER, Christian, 80636 München (DE); SHUSTOV, Andrey, 67059 Ludwigshafen am Rhein (DE); JENNE, Eric, 67454 Hassloch (DE); KOCHENDÖRFER, Kiara Aenne, 68159 Mannheim (DE); LAIB, Heinrich, 67117 Limburgerhof (DE); KÜHN, Heinz-Jürgen, 67593 Westhofen (DE); JACOB, Reiner, 67691 Hochspeyer (DE); DELHOMME-NEUDECKER, Clara, 81825 München (DE)
(74) Vertreter: Reuß, Stephanie
(86) Internationale Anmeldenummer: PCT/EP2021/056207
(87) Internationale Veröffentlichungsnummer: WO 2021/180856

(56) Entgegenhaltungen:
- EP-A1- 2 805 762
- EP-A1- 3 075 704
- EP-A1- 3 153 466
- WO-A1-2015/197181
- WO-A1-2019/228798
- DE-A1- 2 362 628
- DE-A1-102015 004 121
- DE-C3- 2 362 628
- US-A1- 2014 238 523

## Beschreibung

Die Erfindung betrifft einen Reaktor und ein Verfahren zur Durchführung einer chemischen Reaktion gemäß den Oberbegriffen der unabhängigen Patentansprüche.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die WO 2015/197181 A1 offenbart ebenfalls einen Reaktor, dessen Reaktionsrohre in Sternpunktschaltung angeordnet sind.

Es ist grundsätzlich auch denkbar, eine elektrische Beheizung von Reaktoren mittels Gleichstrom oder einphasigem Wechselstrom vorzunehmen. In diesem Fall kann keine Sternschaltung mit einem potentialfreien Sternpunkt realisiert werden, die Stromeinspeisung lässt sich jedoch grundsätzlich in ähnlicher Weise realisieren. Die vorliegende Erfindung eignet sich für beide Varianten der elektrischen Beheizung.

Die WO 2019/228798 A1 offenbart ein Reaktorsystem zur Durchführung einer endothermen Reaktion eines Einsatzgases. Das Reaktorsystem umfasst einen strukturierten Katalysator, der zur Katalyse der endothermen Reaktion eines Einsatzgases angeordnet ist, wobei der strukturierte Katalysator eine makroskopische Struktur aus elektrisch leitfähigem Material umfasst, wobei die makroskopische Struktur eine keramische Beschichtung trägt, wobei die keramische Beschichtung ein katalytisch aktives Material trägt. Das Reaktorsystem umfasst ferner einen Druckmantel, der den strukturierten Katalysator aufnimmt, eine Wärmeisolationsschicht zwischen dem strukturierten Katalysator und dem Druckmantel, und mindestens zwei Leiter, die elektrisch mit dem elektrisch leitfähigen Material und mit einer außerhalb des Druckmantels angeordneten Stromversorgung verbunden sind. Die Stromversorgung ist so dimensioniert ist, dass sie mindestens einen Teil des strukturierten Katalysators auf eine Temperatur von mindestens 200°C erhitzt, indem sie einen elektrischen Strom durch das elektrisch leitfähige Material leitet. Ein Verfahren zur Durchführung einer endothermen Reaktion eines Speisegases ist ebenfalls offenbart.

In der DE 23 62 628 A1 ist ein Rohrofen zur thermischen Behandlung flüssiger oder gasförmiger Medien in Metallrohren, die mittels Widerstandsheizung beheizbar sind, offenbart, wobei die mittels Widerstandsheizung zu beheizenden Rohre an den Enden der zu beheizenden Abschnitte mit Stromzuführungsleitungen über elektrische Anschlüsse leitend verbunden sind.

Die US 2014/0238523 A1 betrifft eine Vorrichtung zum Beheizen eines Rohrleitungssystems für eine Salzschmelze, umfassend mindestens zwei Rohrleitungen, entlang derer sich jeweils ein elektrisches Widerstandsheizelement erstreckt, wobei an jedem elektrischen Widerstandsheizelement an mindestens einem Ende ein dem Erdpotential nahes Potential eingestellt ist und das elektrische Widerstandsheizelement entfernt hiervon mit einem Anschluss einer Gleichstromquelle oder jeweils einer Phase einer n-phasigen Wechselstromquelle verbunden ist.

Insbesondere die Stromeinspeisung hat sich bei derartigen elektrisch beheizten Reaktoren aufgrund der hohen Stromflüsse und Temperaturen als herausfordernd erwiesen. Die Erfindung stellt sich daher die Aufgabe, entsprechende elektrisch beheizte Reaktoren zur Durchführung chemischer Reaktionen zu verbessern.

### Offenbarung der Erfindung

Vor diesem Hintergrund schlägt die vorliegende Erfindung einen Reaktor und ein Verfahren zur Durchführung einer chemischen Reaktion gemäß den Oberbegriffen der unabhängigen Patentansprüche vor. Ausgestaltungen sind jeweils Gegenstand der abhängigen Patentansprüche sowie der nachfolgenden Beschreibung.

In dem zumeist teilweise elektrifizierten Ofenkonzept (der Begriff "Ofen" wird üblicherweise zur Bezeichnung eines entsprechenden Reaktors bzw. zumindest von dessen thermisch isoliertem Reaktionsraum verstanden), das der vorliegenden Erfindung zugrunde liegt, wird zumindest eines der Reaktionsrohre bzw. entsprechende Rohrstrecken hiervon (nachfolgend auch kurz als "Rohre" bezeichnet) selbst als elektrischer Widerstand benutzt, um Wärme zu erzeugen. Diese Strategie hat den Vorteil eines höheren Wirkungsgrads im Vergleich zu einer indirekten Erwärmung durch externe elektrische Heizkörper sowie einer höheren erreichbaren Wärmestromdichte. Im Rahmen der Erfindung wird die Möglichkeit eingeschlossen, einen Teil der gesamten im Ofen aufgewandten Heizleistung auch über Verfeuerung chemischer Energieträger bereitzustellen.

Ist daher hier von einer elektrischen Beheizung die Rede, schließt dies das Vorhandensein einer zusätzlichen nichtelektrischen Beheizung nicht aus. Es kann insbesondere auch vorgesehen sein, die Beiträge der elektrischen und nichtelektrischen Beheizung über die Zeit zu variieren, beispielsweise in Abhängigkeit von Stromangebot und -preis bzw. Angebot und Preis nichtelektrischer Energieträger wie beispielsweise Erdgas.

Die Stromeinspeisung erfolgt im Falle der Beheizung mit mehrphasigem Wechselstrom in die direkt beheizten Reaktionsrohre über M separat angeschlossene Phasen. Die stromleitenden Reaktionsrohre, die mit den M Phasen verbunden sind, werden an einem Sternpunkt vorteilhafterweise ebenfalls elektrisch verbunden. Die Phasenzahl M beträgt insbesondere 3, entsprechend der Phasenzahl üblicher Drehstromquellen bzw. Drehstromnetze. Grundsätzlich ist die vorliegende Erfindung aber nicht auf die Verwendung von drei Phasen beschränkt, sondern kann auch mit einer größeren Phasenzahl, beispielsweise einer Phasenzahl von 4, 5, 6, 7 oder 8, verwendet werden. Ein Phasenversatz beträgt dabei insbesondere 360°/M, d.h. bei einem dreiphasigen Drehstrom 120°.

Durch die Sternschaltung am Sternpunkt wird in einer elektrischen Beheizung mit mehrphasigem Wechselstrom ein Potentialausgleich zwischen den Phasen erreicht, was eine elektrische Isolierung der angeschlossenen Rohrleitungen überflüssig macht. Dies stellt einen besonderen Vorteil eines derartigen Ofenkonzepts dar, da eine Unterbrechung der metallischen Reaktionsrohre zur Isolierung bestimmter Abschnitte insbesondere aufgrund der verwendeten hohen Temperaturen und des damit erforderlichen hohen Material- und Konstruktionsaufwands unerwünscht ist.

Die nachfolgend erläuterten, erfindungsgemäß vorgeschlagenen Maßnahmen eignen sich jedoch in gleicher Weise für die Verwendung von Gleichstrom und die vorliegende Erfindung kann sowohl in wechselstrom- als auch in gleichstrombeheizten Reaktoren oder auch in entsprechenden Mischformen zum Einsatz kommen. Bei einer Gleichstromanordnung ist gegenüber einer Wechselstromanordnung lediglich die Art der Stromquelle und der der Stromeinspeisung entgegengesetzte Bereich der Reaktionsrohre oder entsprechender strombeaufschlagter Abschnitte unterschiedlich. In letzterem wird eine elektrische Verbindung unterschiedlicher Rohrstrecken nur optional durchgeführt. Da in einer Gleichstromanordnung kein potentialfreier Sternpunkt vorliegt, sind geeignete Stromabfuhrelemente bereitzustellen, die den Stromfluss wieder sicher nach außen führen. Entsprechendes gilt grundsätzlich auch für ebenfalls verwendbaren einphasigen Wechselstrom.

Im Sprachgebrauch der Patentansprüche betrifft die vorliegende Erfindung dabei einen Reaktor zur Durchführung einer chemischen Reaktion, der einen Reaktorbehälter (d.h. einen thermisch isolierten oder zumindest teilweise isolierten Bereich) und ein oder mehrere Reaktionsrohre aufweist, wobei eine Anzahl von Rohrstrecken des einen oder der mehreren Reaktionsrohre jeweils zwischen einem ersten Bereich und einem zweiten Bereich innerhalb des Reaktorbehälters und durch einen Zwischenbereich zwischen dem ersten und dem zweiten Bereich verlaufen, und wobei die Rohrstrecken in dem ersten Bereich zur elektrischen Beheizung der Rohrstrecken jeweils elektrisch mit einem oder mehreren Stromanschlüssen, und zwar im Fall einer Gleichstromanordnung mit einem oder mehreren Gleichstromanschlüssen und im Fall einer ein- oder mehrphasigen Wechselstromanordnung mit dem Phasenanschluss bzw. den Phasenanschlüssen ("Außenleitern") der Wechselstromquelle verbunden oder verbindbar sind, wie im Einzelnen unten erläutert.

Der erste Bereich kann insbesondere an einem ersten terminalen Ende der gerade ausgebildeten Rohrstrecken liegen und der zweite Bereich an einem zweiten terminalen Ende, das dem ersten terminalen Ende entgegengesetzt ist. Insbesondere kann der erste Bereich in einem oberen und der zweite Bereich in einem unteren Bereich des Reaktors liegen oder umgekehrt. Der erste Bereich und der zweite Bereich liegen, mit anderen Worten, insbesondere an entgegengesetzten Enden des Reaktorbehälters bzw. dessen Innenraum, wobei der Innenraum des Reaktorbehälters zwischen dem ersten und dem zweiten Bereich insbesondere dem Zwischenbereich entspricht. Der erste Bereich kann beispielsweise die terminalen 5%, 10% oder 20% des Innenraums an einem Ende des Reaktorbehälters darstellen oder umfassen, der zweite Bereich dagegen die terminalen 5%, 10% oder 20% am anderen, entgegengesetzten Ende des Innenraums des Reaktorbehälters. Der erste Bereich ist insbesondere beim Betrieb des Reaktors unten angeordnet, der zweite Bereich oben.

Wie erwähnt, wird dabei in einer mehrphasigen Wechselstromanordnung über die Phasenanschlüsse jeweils eine Wechselspannung bereitgestellt und die Wechselspannungen der Phasenanschlüsse sind in der oben erläuterten Weise phasenverschoben. Als mehrphasige Wechselstromquelle kann im Rahmen der vorliegenden Erfindung beispielsweise ein Versorgungsnetz oder ein geeigneter Generator und/oder Transformator dienen. Durch die Rohrstrecken wird in dieser Anordnung insbesondere eine Sternschaltung gebildet, in der diese an ihrem jeweils der Stromeinspeisung entgegengesetzten Ende, d.h. in dem zweiten Bereich, elektrisch leitend miteinander gekoppelt werden.

Im Fall einer Gleichstromanordnung werden über die Gleichstromanschlüsse dagegen gleiche oder unterschiedliche statische elektrische Potentiale eingespeist und es sind insbesondere an dem jeweils der Stromeinspeisung entgegengesetzten Ende Stromentnahme- bzw. Stromabfuhrelemente bereitgestellt. Die Begriffe "Einspeisung" und "Entnahme" können sich auf die physikalische oder technische Stromrichtung beziehen. Eine einphasige Wechselstromquelle wird vergleichbar verwendet.

In dem Zwischenbereich verlaufen die Rohrstrecken insbesondere frei, d.h. ohne eine mechanische Abstützung, ohne elektrische Kontaktierung und/oder ohne fluidische oder rein mechanische Querverbindungen miteinander durch den Reaktorbehälter. Sie verlaufen in dem Zwischenbereich insbesondere im Wesentlichen oder vollständig gerade, wobei unter "im Wesentlichen gerade" verstanden werden soll, dass eine Winkelabweichung von weniger als 10° oder 5° vorliegt.

Insbesondere die Spaltreaktionen beim Steamcracken sind stark endotherme Reaktionen. Für die Bereitstellung der nötigen Energie für die Reaktion mittels direkter Beheizung (Ohmscher Widerstand) werden daher hohe Stromstärken benötigt, die in dem angesprochenen Reaktorkonzept von einem oder mehreren außerhalb des Reaktors platzierten Transformatoren bereitgestellt werden.

Der elektrische Strom muss mit möglichst geringen Verlusten (geringer elektrischer Widerstand) von außen in das Innere des thermisch isolierten Reaktors und zu den prozessführenden Bereichen geleitet werden. In letzteren führt die endotherme Reaktion zusammen mit dem sehr schnell strömenden Prozessmedium auf der Rohrinnenseite (hoher Wärmeübergang) zu einer sehr effektiven Kühlung der Reaktorrohre, bzw. einer sehr hohen Wärmestromdichte an der Rohrinnenseite. Damit wird in den prozessführenden Rohren die gewünschte direkte Wärmeübertragung vom zumindest teilweise elektrisch beheizten Rohrmaterial zum Prozessgas erreicht.

Eine besondere Problemstellung betrifft die oben erwähnte verlustarme Zuführung des Starkstroms zu den prozessführenden Rohren. Diese Zuführung muss zwangsläufig, sofern eine Stromeinspeisung in die Rohre innerhalb des Reaktors erfolgen soll, über Leitungen erfolgen, die nicht durch einen direkten konvektiven Wärmeübergang an ein kühleres Prozessgas gekühlt werden können, wie auch nachfolgend noch erläutert. Dabei darf es nicht zu einer unzulässigen Temperaturüberhöhung in den weniger effizient gekühlten Bereichen kommen. Darüber hinaus muss über diese Zuführung auch ein steiler Temperaturanstieg von bis zu 900 K (max. Temperaturdifferenz zwischen Umgebung und Reaktor) innerhalb kurzer Weglängen (teilweise weniger als 1 Meter) überwunden werden.

Zur Reduzierung der thermischen Verluste und damit zum Erreichen eines hohen Systemwirkungsgrads ist es zwingend erforderlich, die elektrisch direkt beheizten Reaktorrohe in einer isolierten Box (hier als Reaktorbehälter bezeichnet) zu platzieren. Beim Durchdringen der thermisch isolierten Wand des Reaktorbehälters muss der Stromleiter dabei eine quasi-adiabate Zone überwinden, ohne dass in diesen Bereichen unerlaubt hohe lokale Temperaturen auftreten.

Erfindungsgemäß sind zur Erreichung dieses Ziels in dem ersten Bereich des Reaktors, also im Bereich der Stromeinspeisung, Stromeinspeiseanordnungen vorgesehen, an die jeweils eine Rohrstrecke oder jeweils eine Gruppe der Rohrstrecken elektrisch angebunden ist. Die Rohrstrecken sind in einer solchen Anzahl vorgesehen, dass jeweils eine oder jeweils eine Gruppe von mehreren Rohrstrecken mit jeweils einer der Stromeinspeiseanordnungen verbindbar ist und umgekehrt. Die Anzahl der Stromeinspeiseanordnungen richtet sich dabei nach der Anzahl der Phasenanschlüsse der mehrphasigen Wechselstromquelle im Falle einer Wechselstromanordnung bzw. entspricht diese Anzahl der Anzahl der Gleichstromanschlüsse. Sie kann bei Verwendung einer Wechselstromanordnung gleich der Anzahl von Phasenanschlüssen sein oder ein ganzzahliges Vielfaches hiervon betragen. In letzterem Fall können jeweils beispielsweise zwei der Stromeinspeiseanordnungen mit jeweils einem der Phasenanschlüsse der Wechselstromquelle verbunden sein usw.

Die Stromeinspeiseanordnungen umfassen jeweils eine oder mehrere Kontaktpassagen, die sich an jeweils zumindest eine der Rohrstrecken in dem ersten Bereich anschließt oder anschließen, und die durch die Stromeinspeiseanordnungen verlaufen. Die eine oder die mehreren Kontaktpassagen in den Stromeinspeiseanordnungen kann oder können, wie unten noch genauer beschrieben, jeweils gerade oder in Form eines Umkehrbogens durch die Stromeinspeiseanordnungen verlaufen. Sie sind dann insbesondere als wandverstärkte Krümmer ausgebildet. Bei Reaktionsrohren ohne Umkehrbögen handelt es sich insbesondere um wandverstärkte Manschetten.

Die eine oder die mehreren Kontaktpassagen in den Stromeinspeiseanordnungen kann oder können im Rahmen der Erfindung entweder in einem oder mehreren Bauteilen, das oder die an die Rohrstrecken angefügt und mit den Rohrstrecken hochtemperaturfest stoffschlüssig verbunden ist oder sind, oder alternativ dazu in Form eines oder jeweils eines fortlaufenden Abschnitts der Reaktionsrohre ausgebildet sein. In sämtlichen Ausgestaltungen erweist sich typischerweise eine Ausbildung mit so wenigen Bauteilen wie möglich als vorteilhaft, wie auch unten noch erläutert.

In ersterem Fall können die Rohrstrecken, die zwischen dem ersten und dem zweiten Bereich in dem Reaktor verlaufen, an eine vorgefertigte Komponente, in dem eine oder mehrere der Kontaktpassagen verläuft oder verlaufen, angeschweißt sein, oder eine entsprechende weitere Komponente kann an die Rohrstrecken, die zwischen dem ersten und dem zweiten Bereich in dem Reaktor verlaufen, angegossen sein. Im letzteren Fall können fortlaufende Rohre, die einerseits die Rohrstrecken, die zwischen dem ersten und dem zweiten Bereich in dem Reaktor verlaufen, und anderseits die Kontaktpassagen in den jeweiligen Stromeinspeiseanordnungen bilden sollen, bereitgestellt werden, und weitere Komponenten der Stromeinspeiseanordnungen können durch ein An- oder Umgießen oder Anschweißen bereitgestellt werden.

Es versteht sich, dass, wenn zuvor und nachfolgend davon die Rede ist, dass die Stromeinspeiseanordnungen eine oder mehrere Kontaktpassagen umfassen, "die sich an jeweils zumindest eine der Rohrstrecken in dem ersten Bereich anschließt oder anschließen", dies bedeutet, dass die Kontaktpassagen in den Stromeinspeiseanordnungen mit den jeweiligen Rohrstrecken zwischen dem ersten und dem zweiten Bereich einen durchgängigen Kanal für das durch die Rohrstrecken zu führende Prozessfluid bilden.

Insbesondere setzt sich dabei ein Rohrinnenraum der jeweiligen Rohrstrecken zwischen dem ersten und dem zweiten Bereich in den entsprechenden Kontaktpassagen fort, insbesondere ohne eine nennenswerte Verjüngung oder Erweiterung, wobei eine "nennenswerte" Verjüngung oder Erweiterung eine Verjüngung oder Erweiterung um mehr als 10 % der Querschnittsfläche bezeichnen soll. Der Begriff "Kontaktpassagen" wird verwendet, um auszudrücken, dass es sich um Bereiche handelt, in denen über metallische Bauteile eine leitende Verbindung zu einem Stromanschluss besteht, auch wenn es sich in bestimmten Ausgestaltungen der Erfindung bei den "Kontaktpassagen" um kontinuierliche Fortsetzungen der Rohrstrecken in dem ersten Bereich handelt.

Der Begriff "hochtemperaturfest stoffschlüssig verbunden" soll eine Verbindungsart bezeichnen, mittels derer zwei oder mehr metallische Teile miteinander stoffschlüssig verbunden sind und die Verbindung bei 500 °C bis 1.500 °C, insbesondere 600 °C bis 1.200 °C oder 800 °C bis 1.000 °C dauerhaft ist, d.h. sich bei derartigen Temperaturen im regulären Betrieb nicht löst. Eine hochtemperaturfeste stoffschlüssige Verbindung kann insbesondere als Metall-Metall-Verbindung ausgebildet sein, die derart ausgeführt wird, dass kein nichtmetallischer Werkstoff zwischen den verbundenen Teilen verbleibt. Eine solche Verbindung kann insbesondere durch ein Verschweißen, Angießen oder Umgießen hergestellt werden. Es kann sich auch um eine Verbindung handeln, bei der am Übergang der verbundenen Teile kein Gefügeunterschied festzustellen ist und insbesondere um eine Verbindung, bei der kein zusätzliches Metall zur Verbindung verwendet wird.

Erfindungsgemäß ist eine Wand der Kontaktpassagen jeder Stromeinspeiseanordnung jeweils mit einem Stromeinspeiseelement verbunden, das zumindest einen stabförmigen Abschnitt aufweist, der jeweils an einem Wanddurchtritt durch eine Wand des Reaktorbehälters verläuft. Die "Wand" des Reaktorbehälters kann auch eine Zwischenwand zu einem separaten Raum sein, in der die stabförmigen Abschnitte kontaktiert werden, und der seinerseits mittels einer weiteren Wand oder mehrerer Wände begrenzt ist. Der stabförmige Abschnitt ist, beispielsweise im Gegensatz zu Litzen oder dergleichen, insbesondere einstückig (d.h. insbesondere nicht in Form paralleler oder verflochtener Drähte) aus einem stromleitenden Material wie Metall ausgebildet. Er kann massiv oder zumindest teilweise rohrförmig, d.h. als Hohlstab, ausgebildet sein. Der stabförmige Abschnitt weist eine Längserstreckung senkrecht zu der Wand des Reaktorbehälters auf, die wenigstens doppelt so groß, insbesondere wenigstens dreifach, vierfach oder fünffach und beispielsweise bis zu zehnfach so groß ist wie eine größte Quererstreckung parallel zu der Wand des Reaktorbehälters. Der stabförmige Abschnitt kann im Querschnitt beispielsweise rund, oval oder drei- oder mehreckig ausgebildet sein oder eine beliebige andere Form aufweisen.

Die Stromeinspeiseelemente der Stromeinspeiseanordnungen können mit ihren stabförmigen Abschnitten jeweils direkt an die Wand der Kontaktpassagen angebracht sein oder durch eine einstückige Fertigung in diese übergehen. Es können aber auch ein oder mehrere Zwischenelemente vorgesehen sein, die dann jeweils einen Teil der Stromeinspeiseelemente bilden.

Die Stromeinleitung in die Reaktionsrohre bzw. deren zu beheizende Rohrstrecken erfolgt damit erfindungsgemäß über den stabförmigen Abschnitt, der bevorzugt in senkrechter Richtung zur lokalen Prozessgasströmung an das prozessführende Rohr angebracht wird, d.h. insbesondere am Scheitelpunkt eines Umkehrbogens oder lotrecht zum Rohrverlauf bei ungekrümmten Rohren. Insbesondere kann dabei in einem stabförmigen Abschnitt mit homogener Materialzusammensetzung ein global abnehmender freier Leiterquerschnitt von außen hin zur Reaktionszone vorliegen. Dies betrifft sowohl den stabförmigen Abschnitt als auch den Übergangsbereich zum Reaktionsrohr bzw. der Kontaktpassage, die bevorzugt eine vergrößerte Wandstärke im Vergleich zum Reaktionsrohr fernab der Einspeisung aufweist.

Eine besonders vorteilhafte Ausgestaltung der vorliegenden Erfindung umfasst, dass für zwei beliebige, Isoflächen darstellende Querschnittsflächen S1, S2 durch das Stromeinspeiseelement, über die der zeitlich quadratisch gemittelte Wert (rms-Wert) des elektrischen Potentials Vrms,i jeweils konstant ist, und die in unterschiedlichen Distanzen zu der Wechselspannungsquelle, d.h. insbesondere einem Transformator, angeordnet sind, das zeitlich quadratisch gemittelte Potential Vrms,1 der näher am Transformator liegenden Querschnittsfläche S1 stets höher als das zeitlich quadratisch gemittelte Potential Vrms,2 der weiter weg vom Transformator liegenden Querschnittsfläche S2 ist, so dass gilt Vrms,1 > Vrms,2. Die Begriffe "näher" und "ferner" beziehen sich dabei auf kürzere bzw. längere Fließstrecken des elektrischen Stroms von der Stromquelle zu der jeweiligen Querschnittsfläche. Die Verwendung von rms-Werten für die Potentiale bezieht sich auf den Reaktorbetrieb mit Wechselstrom. Im Falle eines Gleichstrombetriebs gelten die beschriebenen Zusammenhänge für arithmetisch gemittelte Werte des elektrischen Potentials.

Die gesamte Stromeinspeisung (d.h. das gesamte Einspeiseelement mit der Kontaktpassage) ist ferner vorteilhafterweise derart ausgeführt, dass für die erläuterten zwei beliebigen Querschnittsfläche S1 und S2 in unterschiedlichem Abstand zur Stromquelle und mit Vrms,1 > Vrms,2 der Quotient A2/A1 des Flächeninhalts A2 der weiter entfernt von der Stromquelle liegenden Querschnittsfläche S2 und des Flächeninhalts A1 der näher an der Stromquelle liegenden Querschnittsfläche S1 bei bis zu 0,5, insbesondere bei bis zu 0,9, bis zu 1 bis zu 1,1 oder bis zu 2 liegt. In einer besonders bevorzugten Ausführung liegt der Quotient A2/A1 der Flächeninhalte aller beliebigen solcher Flächenpaare bei bis zu 1.

Beispielsweise aus fertigungstechnischen Gründen kann es zu Abweichungen von dieser bevorzugten Ausführung kommen, sodass lokal auch geringe Querschnittszunahmen in Kauf genommen werden können. Für zwei Querschnittsflächen S1* und S2* mit globalen Extremwerten ihrer jeweiligen Flächeninhalte A1* = Amax und A2* = Amin gilt jedoch vorteilhafterweise stets die Beziehung Vrms,1* > Vrms,2*, d.h. dass die Fläche mit dem höchsten Querschnitt näher an der Stromquelle liegt als die Fläche mit dem kleinsten Querschnitt.

In der erläuterten Weise kann ein optimalerweise kontinuierlicher Anstieg der Materialtemperatur sichergestellt werden, wobei das Maximum besonders bevorzugt erst in der Reaktionszone erreicht wird. Als Vorgabe bzgl. der Temperaturverteilung kann analog zu den Flächenverteilungen gemäß einer besonders vorteilhaften Ausgestaltung der vorliegenden Erfindung festgelegt werden, dass für die erläuterten zwei beliebigen Querschnittsfläche S1 und S2 in unterschiedlichem Abstand zur Stromquelle und mit Vrms,1 > Vrms,2 die Temperaturdifferenz T1-T2 der Temperatur T1 der näher an Stromquelle liegenden Querschnittsfläche S1 und der Temperatur T2 der ferner von der Stromquelle liegenden Querschnittsfläche S2 bei bis zu -100 K, insbesondere bis zu -10 K, bis zu -1 K, bis zu 0 K, bis zu 1 K, bis zu 10 K oder bis zu 100 K liegt. In einer besonders bevorzugten Ausführung liegt die Temperaturdifferenz T1-T2 aller solcher Flächenpaare bei weniger als 0 K.

Diese Vorgabe beinhaltet unter anderem die Bedingung, dass im gesamten Bereich der Stromeinspeisung eine maximale lokale Temperaturüberhöhung von -100 K, - 10 K, -1 K, 0 K, 1 K, 10 K oder 100 K gegenüber der maximal auftretenden Materialtemperatur in der angrenzenden Rohrstrecke auftritt.

Die Temperaturdifferenz T1*-T2* der Temperaturen T1* und T2* der Querschnittsflächen S1* und S2* mit den globalen Extremwerten der Flächeninhalte A1*=Amax und A2*=Amin im Stromeinspeiseelement beträgt ferner vorteilhafterweise bis zu -500 K, bis zu -200 K, bis zu -100 K, bis zu 0 K oder bis zu 100 K, d.h. dass die Fläche mit dem höchsten Querschnitt entsprechend dieser Ausgestaltung der Erfindung näher am Transformator liegen muss und bevorzugt kühler oder höchstens geringfügig heißer ist als die Fläche mit dem kleinsten Querschnitt.

Das Stromeinspeiseelement ist vorteilhafterweise aus Richtung der Stromquelle zu den Rohrstrecken zunächst als Vollmaterialstab ausgebildet und führt an die näher an den Rohrstrecken liegende Kontaktpassage, die insbesondere als dickwandiger Krümmer oder Mantel ausgebildet sein kann, bis hin zu den relativ dünnwandigen Reaktorrohren bzw. den zu erhitzenden Rohrstrecken.

Der freie Leiterquerschnitt sinkt in einer Ausgestaltung der vorliegenden Erfindung vorteilhafterweise überwiegend kontinuierlich bzw. monoton ab. Da bei in dieser Ausgestaltung vorgesehenen identischen oder gleichartigen Materialien der elektrische Widerstand nur von der verfügbaren Leiterfläche abhängt, steigt auch die spezifisch freigesetzte Energiemenge auf diese Weise stetig an. Damit wird eine möglichst hohe Ausnutzung der zugeführten Energie erreicht, da in den Reaktionsrohren lediglich die vom Prozessgas absorbierte Wärmemenge effektiv nutzbar ist.

Entsprechend einer besonders vorteilhaften Ausgestaltung der vorliegenden Erfindung wird der genaue Verlauf des Leiterquerschnitts darüber hinaus den lokalen Temperatur- und Wärmeübertragungsbedingungen angepasst. Beispielsweise werden im Bereich von quasi-adiabaten Wanddurchtritten durch die Wand des Reaktorbehälters (in denen keine durch die isolierende Reaktorwand keine nennenswerte Wärmeabstrahlung möglich ist) bevorzugt große Querschnitte verwendet, die die lokale Wärmedissipation in diesen Bereichen auf ein Minimum reduzieren, sodass die lokale Temperaturüberhöhung nach oben eingegrenzt werden kann. Mit anderen Worten weist der stabförmige Abschnitt des Stromeinspeiseelements im Bereich des Wanddurchtritts vorteilhafterweise eine größere Querschnittsfläche auf als in wenigstens einem übrigen Bereich. Da, wie nachfolgend erwähnt, der stabförmige Abschnitt verschiebbar in dem Wanddurchtritt geführt ist, soll unter dem Bereich des stabförmigen Abschnitts "im Bereich des Wanddurchtritts" zumindest ein solcher Bereich verstanden sein, der bei maximaler thermischer Ausdehnung der Rohrstrecken in dem Wanddurchtritt liegt.

Wie auch nachfolgend erläutert, sind zur Vermeidung von Kontaktwiderständen zumindest der stabförmige Abschnitt das Stromeinspeiseelements und der Kontaktabschnitt besonders bevorzugt aus einem einteiligen Bauteil, z.B. in Form eines Standgussteiles, gefertigt. Bei einer mehrteiligen Bauweise, die alternativ ebenfalls möglich ist, wird vorteilhafterweise mittel geeigneter Fügeverfahren (z.B. Reibschweißen) sichergestellt, dass auch im Bereich der Fügeverbindung die erläuterten Vorgaben bzgl. des Leiterquerschnitts und der max. lokalen Temperaturerhöhung eingehalten werden.

Mit besonderem Vorteil weisen die Stromeinspeiseelemente jeweils einen freien Leitungsquerschnitt auf, der zwischen dem jeweiligen Wanddurchtritt der Stromeinspeiseelemente und einem Punkt der Wand der einen oder der mehreren Kontaktpassagen, der dem Wanddurchtritt am nächsten liegt und von den jeweiligen Stromeinspeiseelementen elektrisch kontaktiert wird, an keiner Stelle weniger als 10 Quadratzentimeter, vorteilhafterweise an keiner Stelle weniger als 30 Quadratzentimeter und insbesondere an keiner Stelle weniger als 50 Quadratzentimeter beträgt. Durch die Verwendung entsprechend hoher Leitungsquerschnitte kann ein besonders guter Stromübergang ohne Widerstandsverluste sichergestellt werden.

Ein freier Leitungsquerschnitt soll hier den Anteil des Querschnitts einer Leitung bezeichnen, der stromleitend ausgebildet ist. Beispielsweise bei einer rohrförmigen Leitung oder bei einer mit einer Nut oder mit einem Hohlraum versehenen Leitung zählt der Rohrinnenraum bzw. der Bereich der Nut oder des Hohlraums nicht zum freien Leitungsquerschnitt. Bei einer massiven Leitung aus einem stromleitenden Material entspricht dagegen der Querschnitt dem Leitungsquerschnitt und dem freien Leitungsquerschnitt.

Erfindungsgemäß sind die stabförmigen Abschnitte der Stromeinspeiseelemente jeweils längsbeweglich in ihren Wanddurchtritten durch die Wand des Reaktorbehälters geführt. Eine auf diese Weise sichergestellte Bewegungsfreiheit ist besonders vorteilhaft für das mechanische Verhalten der Reaktionsrohre, das vor allem von der thermischen Dehnung der Rohre um mehrere Dezimeter im Betrieb des Reaktors dominiert wird. Durch die Bewegungsfreiheit wird die Biegebelastung auf die Reaktionsrohre, die bei einer starren Befestigung auftreten würde, reduziert werden. Die Reaktionsrohre können andererseits, wie auch unten noch angesprochen, im zweiten Bereich mit einer starren Sternbrücke am Reaktordach befestigt werden, so dass auf diese Weise eine stabile Aufhängung auch bei einer entsprechenden Längsbeweglichkeit der stabförmigen Abschnitte der Stromeinspeiseelemente gegeben ist. Die stabförmigen Abschnitte der Stromeinspeiseelemente stellen aufgrund ihrer vorteilhaften Dimensionierung mit ausreichend hohem Leitungsquerschnitt eine sichere seitliche Führung der Reaktionsrohre sicher.

Da die in dem erfindungsgemäßen Reaktor durchgeführten Reaktionen hohe Temperaturen erfordern, muss die elektrische Verbindung in dem ersten Bereich in einem Hochtemperaturbereich von beispielsweise ca. 900 °C für das Steamcracken realisiert werden. Dies ist durch die erfindungsgemäß vorgeschlagenen Maßnahmen durch die Wahl geeigneter Materialien und deren ausreichende Dimensionierung möglich. Die Verbindung soll gleichzeitig eine hohe elektrische Leitfähigkeit und eine hohe mechanische Stabilität und Zuverlässigkeit bei hohen Temperaturen aufweisen. Ein Versagen der elektrischen Verbindung führt zu asymmetrischen Potentialen am Sternpunkt und in der Folge zur sofortigen sicherheitsbedingten Abschaltung der Anlage aufgrund einer unerwünschten Stromführung von Anlagenteilen. Die vorliegende Erfindung führt durch die Vermeidung derartiger Situationen zu Vorteilen gegenüber dem Stand der Technik.

Die erfindungsgemäß vorgesehene Kontaktierung der Rohrstrecken innerhalb des Reaktorbehälters gegenüber einer theoretisch ebenfalls möglichen Kontaktierung außerhalb des Reaktorbehälters, für die die Reaktionsrohre aus dem Reaktorbehälter geführt werden müssten, hat den Vorteil einer klarer definierten Strecke des elektrischen Wärmeeintrags, weil hierbei keine elektrisch beheizte Rohrabschnitte von dem wärmeren Innenraum zu dem kälteren Außenraum geführt werden müssen. Durch die erfindungsgemäße Kontaktierung sind aufgrund der vollständig innerhalb des Reaktorbehälters angeordneten Rohrstrecken räumlich sehr homogene äußere thermische Randbedingungen der elektrisch beheizten Rohrstrecken erzielbar. Hieraus ergeben sich prozesstechnische Vorteile, beispielsweise kann eine zu erwartende übermäßige lokale Koksbildung in beheizten und nach außen thermisch isolierten Durchtritten vermieden werden.

Außerhalb des Reaktorbehälters können die stabförmigen Abschnitte der Stromeinspeiseelemente beispielsweise elektrisch mittels Anschlusselementen wie Stromschienen und Anschlussbändern an ein Transformatorsystem angebunden sein. Die Anschlussbänder und Stromschienen können dabei aus einem anderen Material gefertigt sein. Diese Anschlusselemente sind dabei, da außerhalb des Reaktorbehälters geringere Temperaturen vorliegen, flexibel ausgebildet. Schaltvorrichtungen können insbesondere auf einer Primärseite des Transformatorsystems installiert sein, weil dort eine höhere Spannung und ein niedrigerer Strom vorliegen.

Im Rahmen der vorliegenden Erfindung können die Stromeinspeiseelemente, die Kontaktpassagen und die Rohrstrecken aus dem gleichen Material oder aus Materialien gebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können die genannten Komponenten auch aus Stählen derselben Stahlklasse ausgebildet sein. Die Verwendung gleicher oder nahe verwandter Materialien kann dabei das Angießen oder Verschweißen erleichtern.

In einer bevorzugten Ausführungsform weisen die Stromeinspeiseelemente, die Kontaktpassagen und die Rohrstrecken eine hitzebeständige Chrom-Nickel-Stahllegierung mit hoher Oxidations- bzw. Zunderbeständigkeit und hoher Aufkohlungsbeständigkeit auf, oder sind aus einer solchen gebildet.

Beispielsweise kann es sich um ein eisenhaltiges Material mit 0,1 bis 0,5 Gew.-% Kohlenstoff, 20 bis 50 Gew.-% Chrom, 20 bis 80 Gew.-% Nickel, 0 bis 2 Gew.-% Niob, 0 bis 3 Gew.-% Silicium, 0 bis 5 % Wolfram und 0 bis 1 Gew.-% anderer Komponenten handeln, wobei die Gehalte sich jeweils zu dem Nichteisenanteil ergänzen.

Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden. Diese haben sich für den Hochtemperatureinsatz als besonders geeignet erwiesen.

In sämtlichen zuvor erläuterten Fällen können das Verbindungselement und die Rohrstrecken aus demselben Material oder aus Materialien ausgebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können das Verbindungselement und die Rohrstrecken auch aus Stählen derselben Stahlklasse ausgebildet sein. Die Verwendung gleicher oder nahe verwandter Materialien kann dabei die einstückige Ausbildung des Verbindungselements und der Rohrstrecken, beispielsweise durch Angießen oder Verschweißen, erleichtern.

In dem zweiten Bereich können sämtliche Rohrstrecken innerhalb des Reaktorbehälters bei Beheizung mittels mehrphasigem Wechselstrom mittels eines starren Verbindungselements ("Sternbrücke") elektrisch leitend miteinander verbunden sein, oder diese Verbindung kann gruppenweise mittels mehrerer starrer Verbindungselemente erfolgen.

Die elektrisch leitende Verbindung wird dabei, d.h. bei Beheizung mittels mehrphasigem Wechselstrom, derart vorgenommen, dass sich ein zumindest weitgehender Potentialausgleich der im ersten Bereich wie erläutert angeschlossenen Phasen ergibt. Das eine oder die mehreren Verbindungselemente koppelt bzw. koppeln die verbundenen Rohrstrecken insbesondere nicht fluidsammelnd und nicht fluidverteilend, im Gegensatz zu einem aus dem Stand der Technik bekannten, außerhalb des Reaktors angeordneten Sammler. Der in der soeben erläuterten Ausgestaltung der Erfindung vorgeschlagene Potentialausgleich innerhalb des Reaktorbehälters hat den Vorteil, einer nahezu vollständige Potentialfreiheit bzw. einer deutlich reduzierten Stromrückführung über einen Neutralleiter. Eine minimale Stromabfuhr über die Headeranschlüsse hin zu anderen Teilen der Prozessanlage und eine weitgehende Berührsicherheit ist die Folge. Auch in diesem Zusammenhang ergibt sich der Vorteil der räumlich sehr homogenen äußeren thermischen Randbedingungen im Gegensatz zu einer für einen Potentialausgleich außerhalb des Reaktorbehälters erforderlichen Führung der Reaktionsrohre durch die Wand des Reaktorbehälters die bereits oben erläuterten prozesstechnische Vorteile.

Durch eine entsprechende Realisierung einer Sternschaltung in Kombination mit der erläuterten Stromeinspeisung über längsgeführte Stromeinspeiseelemente wird insgesamt eine Konstruktion geschaffen, die eine effiziente Bestromung bei gleichzeitiger stabiler Befestigung, die den vor allem aus den hohen Wärmedehnungsraten resultierenden Spannungen standhält, ermöglicht.

Dies gilt auch für die erfindungsgemäß ebenfalls mögliche Beheizung mittels Gleichstrom oder einphasigem Wechselstrom, wobei in diesem Fall, wie erwähnt, kein Sternpunkt im Reaktor vorhanden ist. Gleichwohl kann an dem der Stromeinspeisung entgegengesetzten Ende auch hier eine starre Anordnung vorgesehen sein, da sich die Reaktionsrohre aufgrund der erfindungsgemäß vorgesehenen Stromeinspeiseelemente ohne die Erzeugung von Spannungen im Wesentlichen frei ausdehnen können. An dem der Stromeinspeisung entgegengesetzten Ende der Reaktionsrohre kann also eine starre Anordnung vorgesehen sein, ggf. können aber auch hier Elemente bereitgestellt sein, die den erfindungsgemäßen Stromeinspeiseelementen entsprechen. In jedem Fall kann jedoch auf eine bewegliche Anordnung verzichtet werden.

Die vorliegende Erfindung wird nachfolgend zunächst unter Bezugnahme auf Reaktionsrohre und Reaktoren beschrieben, wie sie zum Steamcracken zum Einsatz kommen. Wie danach erläutert, kann die Erfindung aber auch in anderen Reaktortypen zum Einsatz kommen, wie sie danach angesprochen werden. Generell kann, wie erwähnt, der erfindungsgemäß vorgeschlagene Reaktor zur Durchführung aller endothermen chemischen Reaktionen verwendet werden.

Reaktionsrohre, wie sie typischerweise zum Steamcracken verwendet werden, weisen typischerweise wenigstens einen Umkehrbogen auf. Beispielsweise kann es sich hierbei um sogenannte 2-Passagen-Coils handeln. Diese weisen zwei Rohrstrecken im Reaktorbehälter auf, die über (genau) einen Umkehrbogen ineinander übergehen und daher grundsätzlich die Form eines (verlängerten) U aufweisen. Die in den Reaktorbehälter ein- und aus diesem austretenden Abschnitte, die insbesondere nahtlos oder ohne strömungstechnisch relevanten Übergang in die beheizten Rohrstrecken übergehen, werden hier (auch in Bezug auf die nachfolgend beschriebenen Reaktionsrohre) als "Einspeiseabschnitt" und "Entnahmeabschnitt" bezeichnet. Es sind stets mehrere solcher Reaktionsrohre vorhanden.

Der Reaktor kann also in dieser Ausgestaltung derart ausgebildet sein, dass die Rohrstrecken jeweils zwei Rohrstrecken mehrerer Reaktionsrohre umfassen, die zumindest zum Teil nebeneinander in dem Reaktorbehälter angeordnet sind, wobei die jeweils zwei Rohrstrecken der mehreren Reaktionsrohre in dem ersten Bereich über jeweils einen Umkehrbogen ineinander übergehen. Insbesondere ist, wie erwähnt, eine der jeweils zwei Rohrstrecken in dem zweiten Bereich mit einem Einspeiseabschnitt und die anderen der jeweils zwei Rohrstrecken in dem zweiten Bereich mit einem Entnahmeabschnitt verbunden.

Die eine oder die mehreren Kontaktpassagen in den Stromeinspeiseanordnungen können in diesem Fall die Umkehrbögen umfassen oder darstellen. Da mehrere Reaktionsrohre mit Umkehrbögen vorhanden sind, können bei entsprechender Anzahl auch jeweils mehrere Umkehrbögen in den jeweiligen Stromeinspeiseanordnungen bereitgestellt sein und auf diese Weise an einen Stromanschluss angeschlossen sein. Auf diese Weise kann die mechanische Befestigung verbessert und die Bauteilzahl reduziert werden. Es ist alternativ dazu aber auch möglich, und zwar auch bei Bestromung mehrerer Umkehrbögen über einen Stromanschluss, jeweils eine Stromeinspeiseanordnung pro Umkehrbogen bereitzustellen, beispielsweise um eine individuelle Längsbeweglichkeit der Stromeinspeiseelemente bei ggf. unterschiedlicher thermischer Ausdehnung sicherzustellen.

Die soeben erläuterte Ausgestaltung der Erfindung kann auch auf Fälle übertragen werden, in denen Reaktionsrohre verwendet werden, die zwei Einspeiseabschnitte und einen Entnahmeabschnitt aufweisen. Bei solchen Reaktionsrohren sind die zwei Einspeiseabschnitte jeweils mit einem Rohrabschnitt verbunden. Der Entnahmeabschnitt ist ebenfalls mit einem Rohrabschnitt verbunden. Die mit den Einspeiseabschnitten verbundenen Rohrabschnitte gehen in einem typischerweise Y-förmigen Verbindungsbereich in den mit dem Entnahmeabschnitt verbundenen Rohrabschnitt über. Sowohl die mit den Einspeiseabschnitten verbundenen Rohrabschnitte als auch der mit dem Entnahmeabschnitt verbundene Rohrabschnitt können jeweils keinen, einen oder mehrere Umkehrbögen aufweisen.

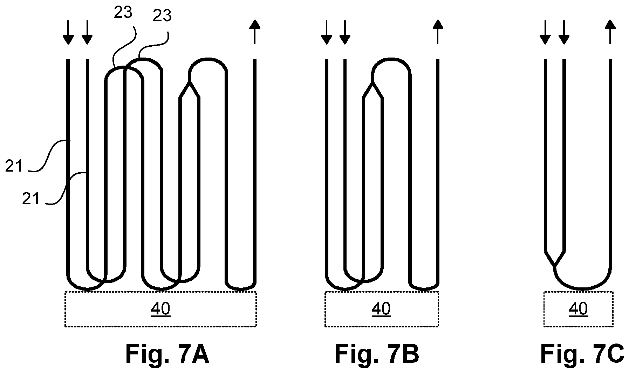

Beispielsweise können Reaktionsrohre verwendet werden, wie sie in Figur 7C veranschaulicht sind. Bei diesen weisen die mit den Einspeiseabschnitten verbundenen Rohrabschnitte keinen Umkehrbogen auf, wohingegen der mit dem Entnahmeabschnitt verbundene Rohrabschnitt einen Umkehrbogen aufweist.

Es können jedoch auch Reaktionsrohre verwendet werden, wie sie in Figur 7B veranschaulicht sind. Bei diesen weisen die mit den Einspeiseabschnitten verbundenen Rohrabschnitte jeweils einen Umkehrbogen auf und der mit dem Entnahmeabschnitt verbundene Rohrabschnitt weist zwei Umkehrbögen auf.

Auch die Verwendung von Reaktionsrohren, wie sie in Figur 7A veranschaulicht sind. ist möglich. Bei diesen weisen die mit den Einspeiseabschnitten verbundenen Rohrabschnitte jeweils drei Umkehrbögen auf und der mit dem Entnahmeabschnitt verbundene Rohrabschnitt weist zwei Umkehrbögen auf.

Neben der zuvor unter Bezugnahme auf 2-Passagen-Coils beschriebenen Ausgestaltung kann aber auch eine Ausgestaltung zum Einsatz kommen, die sich zur Verwendung mit sogenannten 4-Passagen-Coils eignet. Diese weisen vier im Wesentlichen gerade verlaufende Rohrstrecken auf. Auch Anordnungen mit einer höheren, geraden Anzahl an gerade verlaufenden Rohrstrecken sind jedoch möglich.

Ein entsprechend ausgebildeter Reaktor weist dabei allgemeiner betrachtet ein oder mehrere Reaktionsrohre auf, das oder die jeweils eine gerade Anzahl von vier oder mehr seriell miteinander über eine Anzahl von Umkehrbögen verbundenen Rohrstrecken aufweist oder aufweisen, wobei die Anzahl der Umkehrbögen um eins geringer ist als die Anzahl der seriell miteinander über die Umkehrbögen verbundenen Rohrstrecken, und wobei die Umkehrbögen, anfangend mit einem ersten Umkehrbogen in dem ersten Bereich, abwechselnd in dem ersten und dem zweiten Bereich angeordnet sind.

Unter einem "Umkehrbogen" wird hier insbesondere ein Rohrabschnitt oder Rohrbauteil verstanden, der oder das einen teilkreis- oder teilelliptischen, insbesondere halbkreis- oder halbelliptischen Rohrbogen umfasst. Beginn und Ende weisen insbesondere in einer Ebene nebeneinander liegende Schnittflächen auf.

Jeder der Umkehrbögen, sofern er in dem ersten Bereich innerhalb des Reaktorbehälters liegt und entsprechend bestromt werden soll, kann in Form einer Kontaktpassage in einer erfindungsgemäßen Stromeinspeiseanordnung ausgebildet sein oder einen Teil einer solchen darstellen.

Wie erwähnt, kann ein entsprechender Reaktor insbesondere als Reaktor zum Steamcracken ausgebildet sein, und zwar insbesondere durch die Wahl entsprechen temperaturfester Materialien und die geometrische Ausgestaltung der Reaktionsrohre.

Reaktionsrohre, wie sie typischerweise zur Dampfreformierung verwendet werden, weisen typischerweise keine Umkehrbögen innerhalb des Reaktorbehälters auf. In diesem Fall umfassen die Rohrstrecken aber jeweils eine Rohrstrecke von mehreren Reaktionsrohren, wobei die Rohrstrecken innerhalb des Reaktorbehälters fluidisch unverbunden und zumindest zum Teil nebeneinander angeordnet sind und jeweils mit einem Einspeiseabschnitt für Fluid in dem ersten Bereich und einem Entnahmeabschnitt für Fluid in dem zweiten Bereich verbunden sind. Die Einspeise- und Entnahmeabschnitte für Fluid erstrecken sich insbesondere in derselben Richtung wie die Rohrstrecken bzw. bewirken keine um mehr als 15° gegenüber der Fluidströmung in den damit verbundenen Rohrstrecken abgelenkte Fluidströmung. Die Einspeiseabschnitte und Entnahmeabschnitte sind insbesondere ebenfalls einstückig, d.h. insbesondere in Form desselben Rohrs, mit diesen ausgebildet. Die Reaktionsrohre können zur Dampfreformierung insbesondere auch mit einem geeigneten Katalysator ausgestattet werden.

In dieser Ausgestaltung stellen die Kontaktpassagen in einer erfindungsgemäßen Stromeinspeiseanordnung gerade Rohrabschnitte bzw. Kanäle dar. Das Stromeinspeiseelement kann dabei in dem zweiten Bereich insbesondere manschettenartig an die Reaktionsrohre angefügt sein.

In allen Fällen kann durch die Ausbildung der Stromeinspeiseelemente und der Kontaktpassagen sowie optional auch der Rohrstrecken aus so wenigen Einzelteilen wie möglich die Anzahl der Metall-Metall-Verbindungen (z.B. Schweiß- oder Lötverbindungen) reduziert oder sogar komplett auf diese verzichtet werden. Dadurch können die mechanische Stabilität sowie die Zuverlässigkeit erhöht werden. In einer besonders vorteilhaften Ausführung können die Stromeinspeiseelemente und die Kontaktpassagen jeweils als ein einziges Gussteil umgesetzt werden, oder es können, wie erwähnt, Teile der prozessführenden Rohrleitungen umgossen werden und/oder Teile der prozessführenden können Rohrleitungen können als ein integraler Bestandteil eines entsprechenden Gussstücks ausgebildet sein.

Metall-Metall-Verbindungen oder Metallübergänge, die im Rahmen der vorliegenden Erfindung reduziert werden können, könnten zu einer lokalen elektrischen Widerstandsänderung, und deswegen zu Hot Spots führen. Hot Spots wiederum führen zu einer Reduzierung der Lebenszeit durch erhöhte lokale Temperaturen oder zu mechanischen Spannungsspitzen durch hohe lokale Temperaturgradienten. Dies wird im Rahmen der vorliegenden Erfindung vermieden.

Eine einteilige Ausbildung so vieler Komponenten wie möglich bringt mechanische Stabilität, Zuverlässigkeit und eine Reduktion der Einzelbauteile. Eine hohe mechanische Stabilität ist erstrebenswert, da ein Versagen wie erwähnt zu sicherheitskritischen Situationen führen kann. Durch die beschriebene Ausführung im Sinne der vorliegenden Erfindung kann das Prinzip der mit mehrphasigem Wechselstrom widerstandbeheizten Reaktionsrohre in Sternschaltung technisch im Hochtemperaturbereich, d.h. insbesondere bei mehr als 500 °C, mehr als 600 °C, mehr als 700 °C oder mehr als 800 °C, realisiert werden.

Die Erfindung betrifft auch ein Verfahren zur Durchführung einer chemischen Reaktion unter Verwendung eines Reaktors, der einen Reaktorbehälter und ein oder mehrere Reaktionsrohre aufweist, wobei eine Anzahl von Rohrstrecken des einen oder der mehreren Reaktionsrohre jeweils zwischen einem ersten Bereich und einem zweiten Bereich in dem Reaktorbehälter verlaufen, und wobei die ersten Bereiche zur Beheizung der Rohrstrecken jeweils elektrisch mit einem oder mehreren Stromanschlüssen einer Stromquelle verbunden werden.

Erfindungsgemäß wird dabei ein Reaktor verwendet, der in dem ersten Bereich Stromeinspeiseanordnungen aufweist, an die jeweils eine oder jeweils eine Gruppe der Rohrstrecken elektrisch angebunden ist, wobei die Stromeinspeiseanordnungen jeweils eine oder mehrere Kontaktpassagen umfassen, die sich an jeweils zumindest eine der Rohrstrecken in dem ersten Bereich anschließt oder anschließen, und wobei eine Wand der Kontaktpassagen jeweils mit einem Stromeinspeiseelement verbunden ist, das zumindest einen stabförmigen Abschnitt aufweist, der jeweils an einem Wanddurchtritt durch eine Wand des Reaktorbehälters verläuft.

Zu weiteren Merkmalen und Vorteilen eines entsprechenden Verfahrens, bei dem vorteilhafterweise ein Reaktor gemäß einer der zuvor erläuterten Ausgestaltungen der Erfindung verwendet wird, sei auf die obigen Erläuterungen verwiesen.

Die Erfindung wird nachfolgend unter Bezugnahme auf die beigefügten Zeichnungen weiter erläutert, die Ausgestaltungen der vorliegenden Erfindung unter Bezugnahme und im Vergleich zum Stand der Technik veranschaulichen.
Figurenbeschreibung
Figur 1 veranschaulicht schematisch einen Reaktor zur Durchführung einer chemischen Reaktion gemäß einer nicht erfindungsgemäßen Ausgestaltung.
Figur 2 veranschaulicht schematisch einen Reaktor zur Durchführung einer chemischen Reaktion gemäß einer Ausgestaltung der Erfindung.
Figur 3 veranschaulicht schematisch einen Reaktor zur Durchführung einer chemischen Reaktion gemäß einer weiteren Ausgestaltung der Erfindung.
Figur 4 veranschaulicht schematisch einen Reaktor mit einer Stromeinspeiseanordnung gemäß einer Ausgestaltung der Erfindung.
Figuren 5A bis 5C veranschaulichen Reaktionsrohre und entsprechende Anordnungen zur Verwendung in einem Reaktor gemäß einer Ausgestaltung der Erfindung.
Figuren 6A und 6B veranschaulichen Reaktionsrohre und entsprechende Anordnungen zur Verwendung in einem Reaktor gemäß einer Ausgestaltung der Erfindung.
Figuren 7A bis 7C veranschaulichen weitere Reaktionsrohre zur Verwendung in einem Reaktor gemäß einer Ausgestaltung der Erfindung.
Figur 8 zeigt Werte thermischer und elektrischer Kenngrößen in einer Stromeinspeiseanordnung gemäß einer Ausgestaltung der Erfindung.
Figur 9 veranschaulicht schematisch einen Reaktor mit einer Stromeinspeiseanordnung gemäß einer Ausgestaltung der Erfindung.

In den Figuren sind einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt. Die Figurenbeschreibung nimmt dabei wiederholt auf eine Wechselstrombeheizung Bezug. Wie erwähnt, eignet sich die vorliegende Erfindung aber in gleicher Weise auch zur Verwendung von Gleichstrom zur Beheizung. Auf die obigen Erläuterungen wird dabei verwiesen.

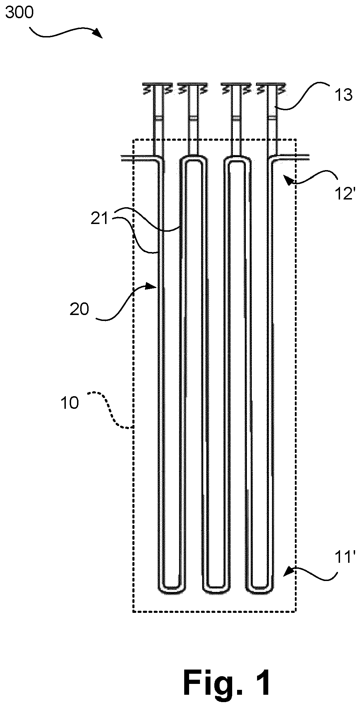

Figur 1 veranschaulicht schematisch einen Reaktor zur Durchführung einer chemischen Reaktion gemäß einer nicht erfindungsgemäßen Ausgestaltung.

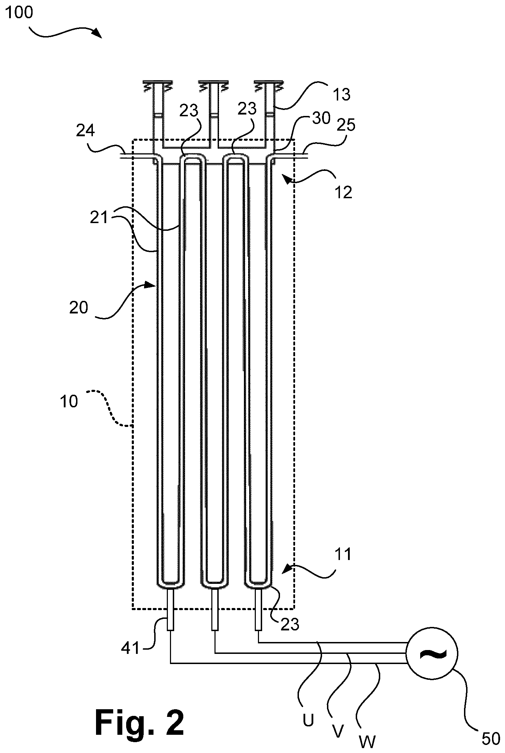

Der hier mit 300 bezeichnete Reaktor ist zur Durchführung einer chemischen Reaktion eingerichtet. Erweist dazu einen insbesondere thermisch isolierten Reaktorbehälter 10 und ein Reaktionsrohr 20 auf, wobei eine Anzahl von Rohrstrecken des Reaktionsrohrs 20, die hier nur in zwei Fällen mit 21 bezeichnet sind, jeweils zwischen einer ersten Zone 11' und einer zweiten Zone 12' in dem Reaktorbehälter 10 verlaufen. An einer Decke des Reaktorbehälters bzw. an einer Stützstruktur ist das Reaktionsrohr 20, das nachfolgend noch in Bezug auf Figur 2 näher erläutert wird, mit geeigneten Aufhängungen 13 befestigt. In einem unteren Bereich kann der Reaktorbehälter insbesondere eine nicht veranschaulichte Feuerung aufweisen. Es versteht sich, dass hier und nachfolgend jeweils mehrere Reaktionsrohre bereitgestellt sein können.

Figur 2 veranschaulicht schematisch einen Reaktor zur Durchführung einer chemischen Reaktion gemäß Ausgestaltung der vorliegenden Erfindung, der insgesamt mit 100 bezeichnet ist.

Die zuvor mit 11' und 12' bezeichneten Zonen sind hier als Bereiche 11 und 12 ausgebildet, wobei die Rohrstrecken 21 zur Beheizung der Rohrstrecken 21 in den ersten Bereichen 11 jeweils elektrisch mit den Phasenanschlüssen U, V, W) einer mehrphasigen Wechselstromquelle 50 verbindbar sind. Schalter und dergleichen sowie die spezifische Art der Anbindung sind nicht veranschaulicht.

Die Rohrstrecken 21 sind in der hier veranschaulichten Ausgestaltung der Erfindung in den zweiten Bereichen 12 mittels eines Verbindungselements 30, das einstückig mit dem einen oder den mehreren Reaktionsrohren 20 verbunden und innerhalb des Reaktorbehälters 10 angeordnet ist, elektrisch leitend miteinander verbunden. Daran kann auch ein Neutralleiter angebunden sein.

In dem hier veranschaulichten Reaktor 100 sind damit mehrere Rohrstrecken 21 eines Reaktionsrohrs 20 (wenngleich mehrere solcher Reaktionsrohre 20 bereitgestellt sein können), die nebeneinander in dem Reaktorbehälter 10 angeordnet sind. Die Rohrstrecken 21 gehen über Umkehrbögen 23 (nur teilweise bezeichnet) ineinander über und sind mit einem Einspeiseabschnitt 24 und einem Entnahmeabschnitt 25 verbunden.

Eine erste Gruppe der Umkehrbögen 23 (in der Zeichnung unten) ist nebeneinander in dem ersten Bereich 11 und eine zweite Gruppe der Umkehrbögen 23 (in der Zeichnung oben) ist nebeneinander in dem zweiten Bereich 12 angeordnet. Die Umkehrbögen 23 der zweiten Gruppe sind in dem Verbindungselement 30 ausgebildet und die Rohrstrecken 21 erstrecken sich ausgehend von dem Verbindungselement 30 in dem zweiten Bereich 12 zu dem ersten Bereich 11.

Die Verwendung des Verbindungselements 30 ist im Rahmen der vorliegenden Erfindung optional, wenngleich vorteilhaft. Ausgestaltungen der Erfindung, die nachfolgend erläutert sind, betreffen dagegen insbesondere die Ausgestaltung der Mittel zur Stromeinspeisung in dem ersten Bereich 11. Diese erfolgt durch die Verwendung von Stromeinspeiseelementen 41, die hier stark vereinfacht veranschaulicht sind und von denen nur eines bezeichnet ist.

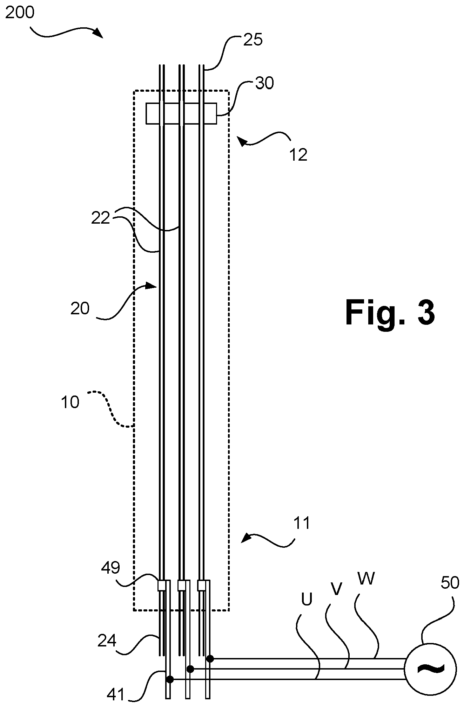

Figur 3 veranschaulicht schematisch einen Reaktor zur Durchführung einer chemischen Reaktion gemäß Ausgestaltung der vorliegenden Erfindung, der insgesamt mit 200 bezeichnet ist.

In dem Reaktor 200 umfassen die hier abweichend mit 22 bezeichneten Rohrstrecken jeweils eine Rohrstrecke 22 von mehreren Reaktionsrohren 20, wobei die Rohrstrecken fluidisch 22 unverbunden nebeneinander in dem Reaktorbehälter 10 angeordnet sind und jeweils mit Einspeiseabschnitten 24 und Entnahmeabschnitten 25 verbunden sind. Zu den übrigen Elementen sei auf die obigen Erläuterungen zu den voranstehenden Figuren ausdrücklich verwiesen.

Wiederum ist die Verwendung eines Verbindungselements 30 im Rahmen der vorliegenden Erfindung optional, wenngleich vorteilhaft. Auch hier sind Stromeinspeiseelemente 41 stark vereinfacht veranschaulicht. Diese können einen manschettenartigen Bereich 49 aufweisen, der in dem ersten Bereich 11 um die Reaktionsrohre 20 bzw. die Rohrstrecken gelegt sind.

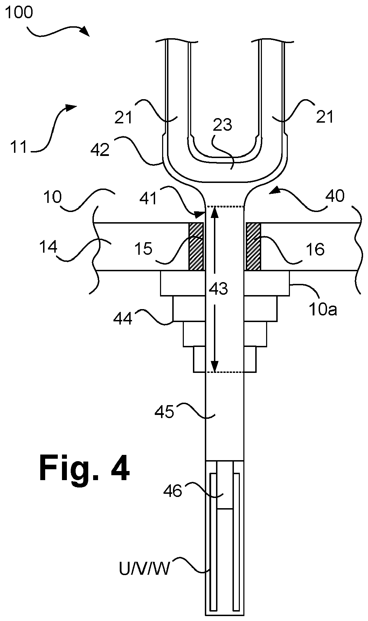

Figur 4 zeigt eine Ausschnittsdarstellung des ersten Bereichs 11 eines Reaktors 100, beispielsweise gemäß Figur 2, mit einer in dem ersten Bereich 11 angeordneten Stromeinspeiseanordnung 40 und einem daran angebundenen Reaktionsrohr 20, dessen hier abschnittsweise veranschaulichten Rohrstrecken 21 hier über einen Umkehrbogen 23 ineinander übergehen.

Der Umkehrbogen 23 ist hier in einer Kontaktpassage 42 mit einer verstärkten Wandung ausgebildet, die sich an die zwei Rohrstrecken 21 in dem ersten Bereich 11 anschließt. Eine Wand der Kontaktpassage 42, und damit des Umkehrbogens 23, ist mit dem bereits erwähnten, insgesamt mit 41 bezeichneten Stromeinspeiseelement verbunden, das, wie hier zwischen gestrichelten Linien angedeutet, einen stabförmigen Abschnitt 43 aufweist, der jeweils an einem Wanddurchtritt 15 durch eine Wand 14 des Reaktorbehälters 10 verläuft. Der Wanddurchtritt 15 ist hier übertrieben breit dargestellt. Der stabförmige Abschnitt ist in dem Wanddurchtritt 15 längsbeweglich aufgenommen und beispielsweise mit einem geeigneten Isoliermaterial 16 ausgekleidet.

An der Außenseite der Wand 14 des Reaktorbehälters 10 kann optional, aber für die vorliegende Erfindung keinesfalls wesentlich, eine Balgenanordnung 44 bereitgestellt sein, die eine gasdichte Abdichtung des Reaktorbehälters 10 gegenüber der Umgebung trotz der Längsbeweglichkeit der stabförmigen Abschnitte 43 sicherstellt.

An den stabförmigen Abschnitt 43 schließt sich im dargestellten Beispiel ein weiterer stabförmiger Abschnitt 45 an, dessen Temperatur mit zunehmendem Abstand zum Reaktorbehälter 10 zunehmend sinkt. Der weitere stabförmige Abschnitt geht in einen Stromeinspeisezapfen 46 über, an den beispielsweise zwei Stromschienen oder Litzen zum Anschluss der Phasen U,V,W bzw. von entsprechenden Stromanschlüssen einer Gleichstromquelle oder einer einphasigen Wechselstromquelle angebracht sind.

Bei Crackeröfen werden können neben den zuvor in den Figuren 1 und 2 gezeigten Reaktionsrohren 20, die üblicherweise als 6-Passagen-Coils bezeichnet werden, und die sechs gerade Rohrstrecken 21 mit zwei 180°-Krümmern, d.h. Umkehrbögen 23, oben bzw. in dem zweiten Bereich 12 und drei 180°-Krümmern, d.h. Umkehrbögen 23, unten bzw. in dem ersten Bereich 11 (letztere mit entsprechenden Stromeinspeiseanordnungen) aufweisen, auch Varianten mit weniger Passagen verwendet werden. Zum Beispiel weisen sogenannte 2-Passagen-Coils nur zwei gerade Rohrstrecken 21 und nur einen 180°-Krümmer bzw. Umkehrbogen 23 auf. Übertragen auf eine elektrische Beheizung kann diese Variante als eine Kombination von 6-Passagen-Crackerofen (Figuren 1 und 2) und Reformerofen (Figur 3, mit Reaktionsrohren ohne Umkehrbögen 23) angesehen werden:
Die Stromeinspeisung kann jeweils an einer Stelle pro Reaktionsrohr 21 am unteren (bzw. einzigen) Umkehrbogen stattfinden. Jeweils M Reaktionsrohre können elektrisch miteinander gekoppelt sein, mit einer Phasenverschiebung um 360°/M und mit einem gemeinsamen Verbindungselement 30. Dabei kann in einer ersten Alternative pro Coil-Paket bzw. für alle jeweils betrachteten Reaktionsrohre 20 ein besonders großes Verbindungselement 30 verwendet werden. In einer zweiten Alternative ist aber auch der Einsatz von zwei kleiner dimensionierten Verbindungselementen 30 möglich.

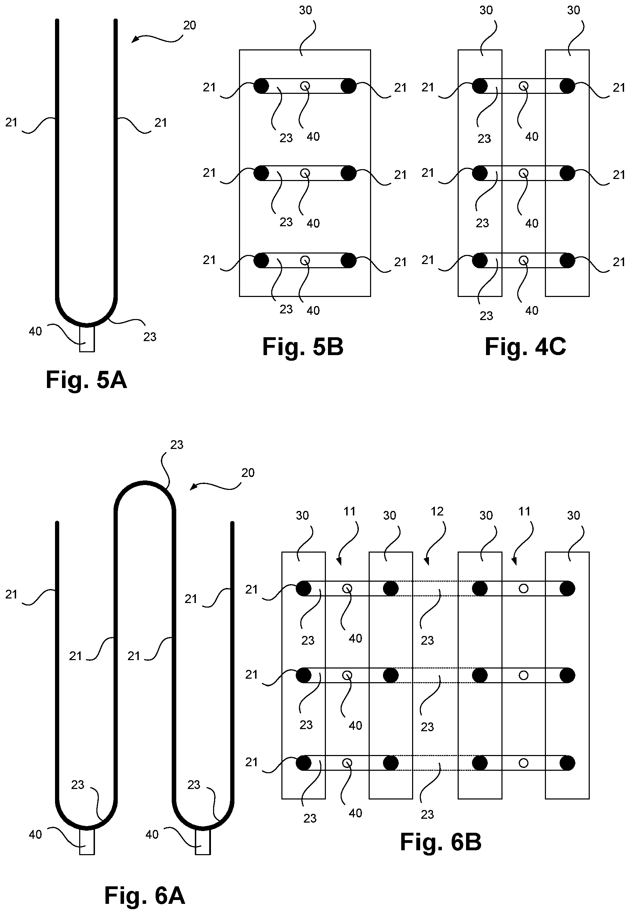

Die soeben erläuterte erste Alternative ist in Figur 5B, die soeben erläuterte zweite Alternative in Figur 5C in einer Querschnittsansicht durch die Rohrstrecken 21 veranschaulicht, wobei ein entsprechendes Reaktionsrohr 20 in einer Ansicht senkrecht zu den Ansichten der Figuren 5B und 5C in Figur 5A dargestellt ist. Zur Bezeichnung der entsprechenden Elemente sei auf die Figur 1 verwiesen. Es versteht sich, dass das oder die Verbindungselemente 30 mit den dort ggf. angeordneten Umkehrbögen 23 einerseits und die anderen Umkehrbögen 23 andererseits mit den Anschlüssen an die Phasen U, V, W über die Stromeinspeiseanordnungen 40 (hier stark vereinfacht gezeigt) in unterschiedlichen Ebenen, entsprechend dem ersten und dem zweiten Bereich 11, 12 eines Reaktors, angeordnet sind. Wiederum sei betont, dass Vorhandensein und Anordnung der Verbindungselemente 30 im Rahmen der vorliegenden Erfindung rein optional bzw. beliebig ist.

Entsprechend kann dieses Konzept auch auf Coils bzw. Reaktionsrohre 20 mit vier Passagen bzw. Rohrstrecken 21 (sogenannte 4-Passagen-Coils) angewandt werden, in diesem Fall mit einer, zwei oder vier Sternbrücken bzw. Verbindungselementen 30. Ein entsprechendes Beispiel ist in den Figuren 6A und 6B dargestellt, wobei in Figur 6B vier Verbindungselemente 3 dargestellt sind. Zur besseren Veranschaulichung sind die Umkehrbögen 23 hier gestrichelt (Umkehrbögen in dem zweiten Bereich 12 des Reaktors) und ungestrichelt (Umkehrbögen in dem ersten Bereich 11) dargestellt. Die Elemente sind der Übersichtlichkeit halber nur teilweise mit Bezugszeichen versehen.

Auf die Figuren 7A bis 7C, die weitere Reaktionsrohre zur Verwendung in einem Reaktor gemäß einer Ausgestaltung der Erfindung veranschaulichen, wurde bereits zuvor Bezug genommen. Die Reaktionsrohre und Rohrabschnitte sind hier nur jeweils teilweise mit Bezugszeichen versehen. Einspeise- und Entnahmeabschnitte ergeben sich durch die dargestellten Flusspfeile. Die Stromeinspeiseanordnungen 40, die insbesondere mehrfach vorhanden und in der zuvor erläuterten Weise ausgebildet sein können, sind stark vereinfacht gestrichelt angedeutet.

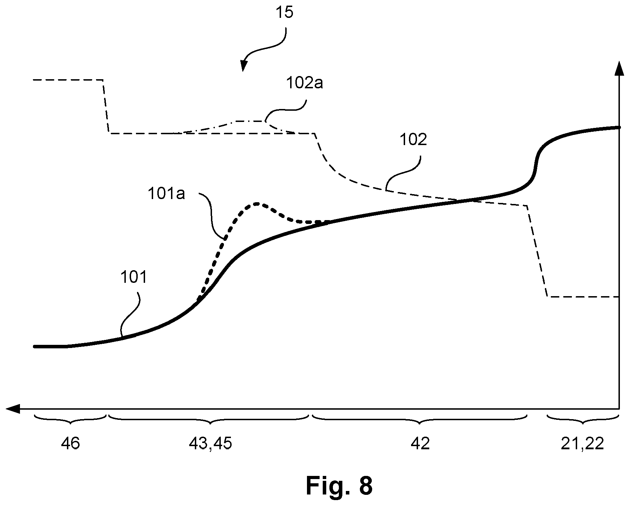

In Figur 8 sind Werte thermischer und elektrischer Kenngrößen in einer Stromeinspeiseanordnung 40 gemäß einer besonders bevorzugten Ausgestaltung der vorliegenden Erfindung veranschaulicht, wobei auf der Abszisse ein Wert des zeitlich quadratisch gemittelten Potentials (rms-Wert) über die bezeichneten Elemente 46 (Stromeinspeisezapfen), 46 und 45 (stabförmige Elemente), 42 (Kontaktpassage) und 21 bzw. 22 (Rohrstrecken) und auf der Ordinate ein Wert der mittleren Temperatur von Querschnitts- bzw. Isoflächen und die entsprechenden Flächeninhalte angegeben sind. Ein Graph 101 (durchgezogene Linie) veranschaulicht die mittleren Temperaturen der Querschnittsflächen und ein Graph 102 (gestrichelte Linie) die Flächeninhalte.

Wie ersichtlich, steigen die mittleren Temperaturen 101 an und zeigen in einer Zwischenzone zwischen der Kontaktpassage 42 und den Rohrstrecken 21 bzw. 22 einen Sprung, insbesondere aufgrund einer rapiden Querschnittsabnahme. Wie mit gestrichelten bzw. strichpunktierten Bereichen 101a bzw. 102a dargestellt, kann im Bereich der Wanddurchtritte 15 eine begrenzte lokale Temperaturerhöhung und eine Querschnittserweiterung vorliegen.

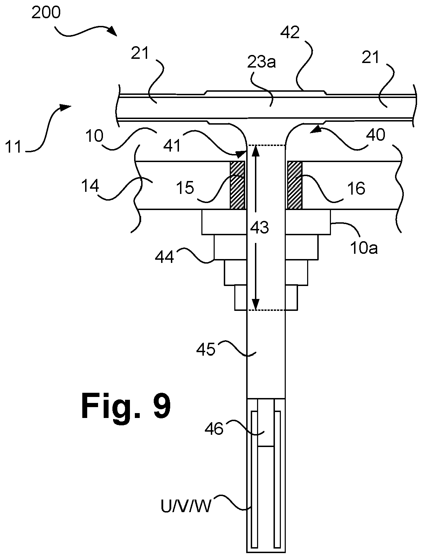

Figur 9 zeigt eine Ausschnittsdarstellung des ersten Bereichs 11 eines Reaktors 200, wobei die jeweils gezeigten Elemente bereits im Zusammenhang mit Figur 4 erläutert wurden. Im Unterschied zu Figur 4 weist das Reaktionsrohr 20 allerdings hier keinen Umkehrbogen auf und die Rohrstrecken 21 sind entlang einer gemeinsamen Mittelachse angeordnet. Ein ungekrümmter Übergangsbereich ist mit 23a bezeichnet. Eine entsprechende Ausgestaltung kann beispielsweise anstelle einer Manschette in dem Reaktor 200 gemäß Figur 3 zum Einsatz kommen.

Der Übergangsbereich 23a ist auch hier in einer Kontaktpassage 42 mit einer verstärkten Wandung ausgebildet, die sich an die zwei Rohrstrecken 21 in dem ersten Bereich 11 anschließt. Zu weiteren Erläuterungen wird auf Figur 4 verwiesen. Der Wanddurchtritt 15 auch hier übertrieben breit dargestellt. Der stabförmige Abschnitt ist in dem Wanddurchtritt 15 auch hier längsbeweglich aufgenommen und beispielsweise mit einem geeigneten Isoliermaterial 16 ausgekleidet. Der Wanddurchtritt 15 kann abweichend zu der hier vorgenommenen Darstellung aber auch eine andere Ausgestaltung erfahren, insbesondere um weitere Bewegungsmöglichkeiten zu schaffen. Dies betrifft auch die optionale Balgenanordnung 44.

## Patentansprüche

1. Reaktor (100, 200) zur Durchführung einer chemischen Reaktion, der einen Reaktorbehälter (10) und ein oder mehrere Reaktionsrohre (20) aufweist, wobei eine Anzahl von Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, wobei die Rohrstrecken (21, 22) in dem ersten Bereich (11) zur elektrischen Beheizung der Rohrstrecken (21, 22) jeweils elektrisch mit Stromanschlüssen (U, V, W) einer Stromquelle (50) verbunden oder verbindbar sind, wobei in dem ersten Bereich (11) des Reaktors (100, 200) Stromeinspeiseanordnungen (40) bereitgestellt sind, an die jeweils eine oder jeweils eine Gruppe der Rohrstrecken (21, 22) elektrisch angebunden ist, und die jeweils eine oder mehrere Kontaktpassagen (42) umfassen, die sich an jeweils zumindest eine der Rohrstrecken (21, 22) in dem ersten Bereich (11) anschließt oder anschließen, wobei eine Wand der Kontaktpassagen (42) jeweils mit einem Stromeinspeiseelement (41) verbunden ist, das einen stabförmigen Abschnitt (43) aufweist, der an einem Wanddurchtritt (15) durch eine Wand (14) des Reaktorbehälters (10) verläuft, wobei die stabförmigen Abschnitte (43) der Stromeinspeiseelemente (41) jeweils im Betrieb längsbeweglich in ihren jeweiligen Wanddurchtritten (15) durch die Wand (14) des Reaktorbehälters (10) geführt sind, und wobei die stabförmigen Abschnitte (43) der Stromeinspeiseelemente (41) außerhalb des Reaktorbehälters (10) elektrisch mittels flexiblen Anschlusselementen mit den Stromanschlüssen (U, V, W) der Stromquelle (50) verbunden oder verbindbar sind.

2. Reaktor (100, 200) nach Anspruch 1, bei dem die Rohrstrecken (21, 22) in einer solchen Anzahl bereitgestellt sind, dass jeweils eine oder jeweils eine Gruppe von mehreren der Rohrstrecken (21, 22) mit jeweils einer der Stromeinspeiseanordnungen (40) verbindbar ist.

3. Reaktor (100, 200) nach Anspruch 1 oder 2, bei dem die eine oder die mehreren Kontaktpassagen (42) in einem oder mehreren Bauteilen, das oder die an die Rohrstrecken (21, 22) angefügt und mit diesen hochtemperaturfest stoffschlüssig verbunden ist oder sind, oder in Form eines oder jeweils eines fortlaufenden Abschnitts der Reaktionsrohre (21, 22) ausgebildet sind.

4. Reaktor (100, 200) nach einem der vorstehenden Ansprüche, bei dem der stabförmige Abschnitt (43) jeweils eine Längserstreckung senkrecht zu der Wand des Reaktorbehälters aufweist, die wenigstens doppelt so groß wie eine größte Quererstreckung parallel zu der Wand (15) des Reaktorbehälters (10) ist.

5. Reaktor (100, 200) nach einem der vorstehenden Ansprüche, bei dem die Stromeinspeiseelemente (41) jeweils einen freien Leitungsquerschnitt aufweisen, der zwischen dem jeweiligen Wanddurchtritt (15) der Stromeinspeiseelemente (41) und einem Punkt der Wand der einen oder der mehreren Kontaktpassagen (42), der dem Wanddurchtritt (15) am nächsten liegt und von den jeweiligen Stromeinspeiseelementen (41) elektrisch kontaktiert wird, an keiner Stelle weniger als 10 Quadratzentimeter beträgt.

6. Reaktor (100, 200) nach einem der vorstehenden Ansprüche, bei dem die Stromeinspeiseelemente (41), Kontaktpassagen (42) und Rohrstrecken (21, 22) aus dem gleichen Material oder aus Materialien gebildet sein, deren elektrische Leitfähigkeiten sich um nicht mehr als 50% voneinander unterscheiden.

7. Reaktor (100, 200) nach einem der vorstehenden Ansprüche, bei dem die Stromeinspeiseelemente (41), Kontaktpassagen (32) und Rohrstrecken (21, 22) aus einer Chrom-Nickel-Stahllegierung mit 0,1 bis 0,5 Gew.-% Kohlenstoff, 20 bis 50 Gew.-% Chrom, 20 bis 80 Gew.-% Nickel, 0 bis 2 Gew.-% Niob, 0 bis 3 Gew.-% Silicium, 0 bis 5 % Wolfram und 0 bis 1 Gew.-% anderer Komponenten gebildet sind, wobei die Gehalte sich jeweils zu einem Nichteisenanteil ergänzen.

8. Reaktor (100, 200) nach einem der vorstehenden Ansprüche, bei dem die Rohrstrecken (21, 22) insgesamt oder gruppenweise innerhalb des Reaktorbehälters (10) mittels eines oder mittels mehrerer starrer Verbindungselements (30) elektrisch leitend verbunden sind.

9. Reaktor (100) nach einem der vorstehenden Ansprüche, bei dem das oder die Reaktionsrohre (20) einen oder mehrere Umkehrbögen (23) in dem ersten Bereich (11) des Reaktorbehälters (10) aufweisen und die Kontaktpassagen (42) in den Stromeinspeiseanordnungen (40) den einen oder die mehreren Umkehrbögen (23) in dem ersten Bereich (11) des Reaktorbehälters (10) umfassen oder bilden.

10. Reaktor (200) nach einem der vorstehenden Ansprüche, bei dem mehrere Reaktionsrohre (22) ohne Umkehrbögen (23) in dem ersten Bereich (11) des Reaktorbehälters (10) verlaufen und die Kontaktpassagen (42) in den Stromeinspeiseanordnungen (40) gerade Rohrabschnitte bilden.

11. Reaktor (100, 200) nach Anspruch 9, der als Reaktor (100) zum Steamcracken ausgebildet ist, oder nach Anspruch 10, der als Reaktor (200) zur Dampfreformierung, zur Trockenreformierung oder zur katalytischen Dehydrierung von Alkanen ausgebildet ist.

12. Reaktor (100, 200) nach einem der vorstehenden Ansprüche, bei dem die außerhalb des Reaktorbehälters (10) angebrachten flexiblen Anschlusselemente aus einem anderen Material als die längsbeweglich in ihren jeweiligen Wanddurchtritten (15) durch die Wand (14) des Reaktorbehälters (10) geführten stabförmigen Abschnitte (43) der Stromeinspeiseelemente (41) gefertigt sind.

13. Reaktor (100, 200) nach einem der vorstehenden Ansprüche, bei dem die Wand (14), durch die die stabförmigen Abschnitte (43) der Stromeinspeiseelemente (41) längsbeweglich geführt werden, eine Zwischenwand zu einem separaten Raum ist, in der die stabförmigen Abschnitte mit flexiblen Anschlusselementen kontaktiert werden, und der seinerseits mittels einer weiteren Wand oder mehrerer Wände begrenzt ist.

14. Verfahren zur Durchführung einer chemischen Reaktion unter Verwendung eines Reaktors (100, 200), der einen Reaktorbehälter (10) und ein oder mehrere Reaktionsrohre (20) aufweist, wobei eine Anzahl von Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, wobei die Rohrstrecken (21, 22) in dem ersten Bereich (11) zur Beheizung der Rohrstrecken (21, 22) jeweils elektrisch mit Stromanschlüssen (U, V, W) einer Stromquelle (50) verbunden werden, wobei ein Reaktor (100, 200) verwendet wird, bei dem in dem ersten Bereich (11) des Reaktors (100, 200) Stromeinspeiseanordnungen (40) bereitgestellt sind, an die jeweils eine oder jeweils eine Gruppe der Rohrstrecken (21, 22) elektrisch angebunden ist, und die jeweils eine oder mehrere Kontaktpassagen (42) umfassen, die sich an jeweils zumindest eine der Rohrstrecken (21, 22) in dem ersten Bereich (11) anschließt oder anschließen, wobei eine Wand der Kontaktpassagen (42) jeweils mit einem Stromeinspeiseelement (41) verbunden ist, das einen stabförmigen Abschnitt (43) aufweist, der an einem Wanddurchtritt (15) durch eine Wand (14) des Reaktorbehälters (10) verläuft, wobei die stabförmigen Abschnitte (43) der Stromeinspeiseelemente (41) jeweils im Betrieb längsbeweglich in ihren jeweiligen Wanddurchtritten (15) durch die Wand (14) des Reaktorbehälters (10) geführt sind, und wobei die stabförmigen Abschnitte (43) der Stromeinspeiseelemente (41) außerhalb des Reaktorbehälters (10) elektrisch mittels flexiblen Anschlusselementen mit den Stromanschlüssen (U, V, W) der Stromquelle (50) verbunden sind oder werden.

15. Verfahren nach Anspruch 14, bei dem ein Reaktor nach einem der Ansprüche 1 bis 13 verwendet wird.

## Claims

1. A reactor (100, 200) for carrying out a chemical reaction, comprising a reactor vessel (10) and one or more reaction tubes (20), wherein a number of tube sections (21, 22) of the one or more reaction tubes (20) in each case run between a first region (11) and a second region (12) in the reactor vessel (10), wherein for the electrical heating of the tube sections (21, 22), the tube sections (21, 22) in the first region (11) in each case are or can be electrically connected to current connections (U, V, W) of a current source (50), wherein current feed arrangements (40) are provided in the first region (11) of the reactor (100, 200), to which in each case one or in each case one group of the tube sections (21, 22) are electrically connected, and which each comprise one or more contact passages (42) that in each case adjoins or adjoin at least one of the tube sections (21, 22) in the first region (11), wherein a wall of the contact passages (42) in each case is connected to a current feed element (41) that has a rod-shaped section (43) that runs at a wall passage (15) through a wall (14) of the reactor vessel (10), wherein the rod-shaped sections (43) of the current feed elements (41) are in each case guided during operation in a longitudinally movable manner in their respective wall passages (15) through the wall (14) of the reactor vessel (10), and wherein the rod-shaped sections (43) of the current feed elements (41) outside the reactor vessel (10) are electrically connected or connectable to the current connections (U, V, W) of the current source (50) by means of flexible connection elements.

2. The reactor (100, 200) according to claim 1, in which the tube sections (21, 22) are provided in such a number that in each case one or in each case one group of a plurality of the tube sections (21, 22) can in each case be connected to one of the current feed arrangements (40).

3. The reactor (100, 200) according to claim 1 or 2, in which the one or more contact passages (42) are formed in one or more components that is or are attached and firmly bonded to the tube sections (21, 22) in a high-temperature-resistant manner, or in the form of, in each case, a section or a continuous section of the reaction tubes (21, 22).

4. The reactor (100, 200) according to one of the preceding claims, in which the rod-shaped section (43) has in each case a longitudinal extension perpendicular to the wall of the reactor vessel, which is at least twice as large as the largest transverse extension parallel to the wall (15) of the reactor vessel (10).

5. The reactor (100, 200) according to one of the preceding claims, in which the current feed elements (41) each have a free conductor cross-section that, between the respective wall passage (15) of the current feed elements (41) and a point of the wall of the one or more contact passages (42) that is closest to the wall passage (15) and is electrically contacted by the respective current feed elements (41), is at no point less than 10 square centimeters.

6. The reactor (100, 200) according to one of the preceding claims, in which the current feed elements (41), the contact passages (42) and the tube sections (21, 22) are formed from the same material or from materials whose electrical conductivities differ from one another by no more than 50%.

7. The reactor (100, 200) according to one of the preceding claims, in which the current feed elements (41), the contact passages (32) and the tube sections (21, 22) are formed from a chromium-nickel-steel alloy with 0.1 to 0.5 wt% carbon, 20 to 50 wt% chromium, 20 to 80 wt% nickel, 0 to 2 wt% niobium, 0 to 3 wt% silicon, 0 to 5% tungsten and 0 to 1 wt% other components, wherein the constituents complement each other to form a non-ferrous fraction.

8. The reactor (100, 200) according to one of the preceding claims, in which the tube sections (21, 22) are electrically conductively connected as a whole or in groups within the reactor vessel (10) by means of one or by means of a plurality of rigid connecting elements (30).

9. The reactor (100) according to one of the preceding claims, in which the reaction tube or tubes (20) have one or more U-bends (23) in the first region (11) of the reactor vessel (10) and the contact passages (42) in the current feed arrangements (40) comprise or form the one or more U-bends (23) in the first region (11) of the reactor vessel (10).

10. The reactor (200) according to one of the preceding claims, in which a plurality of reaction tubes (22) without U-bends (23) run in the first region (11) of the reactor vessel (10) and the contact passages (42) in the current feed arrangements (40) form straight tube sections.

11. The reactor (100, 200) according to claim 9, which is formed as a reactor (100) for steam cracking, or according to claim 10, which is formed as a reactor (200) for steam reforming, for dry reforming or for the catalytic dehydrogenation of alkanes.

12. The reactor (100, 200) according to one of the preceding claims, in which the flexible connection elements that are attached outside the reactor vessel (10) are made of a different material than the rod-shaped sections (43) of the current feed elements (41) guided in a longitudinally movable manner in their respective wall passages (15) through the wall (14) of the reactor vessel (10).

13. The reactor (100, 200) according to one of the preceding claims, in which the wall (14) through which the rod-shaped sections (43) of the current feed elements (41) are guided in a longitudinally movable manner is an intermediate wall to a separate space in which the rod-shaped sections are contacted with flexible connection elements, and which in turn is delimited by means of a further wall or a plurality of walls.

14. A method for carrying out a chemical reaction using a reactor (100, 200) that comprises a reactor vessel (10) and one or more reaction tubes (20), wherein a number of tube sections (21, 22) of the one or more reaction tubes (20) in each case run between a first region (11) and a second region (12) in the reactor vessel (10), wherein for heating the tube sections (21, 22), the tube sections (21, 22) in the first region (11) are each electrically connected to current connections (U, V, W) of a current source (50), wherein a reactor (100, 200) is used in which current feed arrangements (40) are provided in the first region (11) of the reactor (100, 200), to which in each case one or in each case one group of the tube sections (21, 22) are electrically connected, and which each comprise one or more contact passages (42) that in each case adjoins or adjoin at least one of the tube sections (21, 22) in the first region (11), wherein a wall of the contact passages (42) in each case is connected to a current feed element (41) that has a rod-shaped section (43) that runs at a wall passage (15) through a wall (14) of the reactor vessel (10), wherein the rod-shaped sections (43) of the current feed elements (41) are in each case guided during operation in a longitudinally movable manner in their respective wall passages (15) through the wall (14) of the reactor vessel (10), and wherein the rod-shaped sections (43) of the current feed elements (41) outside the reactor vessel (10) are electrically connected to the current connections (U, V, W) of the current source (50) by means of flexible connection elements.

15. The method according to claim 14, wherein a reactor according to one of claims 1 to 13 is used.

## Revendications

1. Réacteur (100, 200) pour la réalisation d'une réaction chimique, lequel présente un récipient de réacteur (10) et un ou plusieurs tubes de réaction (20), un certain nombre de sections de tube (21, 22) du ou des plusieurs tubes de réaction (20) s'étendant respectivement entre une première zone (11) et une seconde zone (12) dans le récipient de réacteur(10), les sections de tube (21, 22) étant ou pouvant être connectées respectivement électriquement dans la première zone (11) aux raccordements électriques (U, V, W) d'une source de courant (50) pour le chauffage électrique des sections de tube (21, 22), des ensembles d'alimentation en courant (40) étant fournis dans la première zone (11) du réacteur (100, 200), auxquels une ou un groupe des sections de tube (21, 22) est/sont respectivement connectée(s) électriquement, et qui comprennent respectivement un ou plusieurs passages de contact (42), lequel ou lesquels se raccord(ent) respectivement à au moins une des sections de tube (21, 22) dans la première zone (11), une paroi des passages de contact (42) étant respectivement connectée à un élément d'alimentation en courant (41), lequel présente une section en forme de barre (43), laquelle s'étend par un passage mural (15) à travers une paroi (14) du récipient de réacteur (10), les sections en forme de barre (43) des éléments d'alimentation en courant (41) étant, lors du fonctionnement, guidés respectivement à travers la paroi (14) du récipient de réacteur (10) de manière mobile longitudinalement dans leurs passages muraux (15) respectifs, et les sections en forme de barre (43) des éléments d'alimentation en courant (41) étant ou pouvant être connectés électriquement en dehors du récipient de réacteur (10) au moyen d'éléments de raccordement flexibles aux raccordements électriques (U, V, W) de la source de courant (50).

2. Réacteur (100, 200) selon la revendication 1, dans lequel les sections de tube (21, 22) sont fournies dans un tel nombre, que respectivement une ou respectivement un groupe de plusieurs sections de tube (21, 22) peut/peuvent être connectée(s) à respectivement un des ensembles d'alimentation en courant (40).

3. Réacteur (100, 200) selon la revendication 1 ou 2, dans lequel le ou les plusieurs passages de contact (42) est ou sont conçus en un ou plusieurs composants qui est ou sont joint(s) aux sections de tube (21, 22) ou relié(s) à celles-ci de manière résistante aux hautes températures par complémentarité de matériaux, ou sous la forme d'un ou respectivement d'une section continue des tubes de réaction (21, 22).

4. Réacteur (100, 200) selon l'une des revendications précédentes, dans lequel la section en forme de barre (43) présente respectivement une extension longitudinale perpendiculaire à la paroi du récipient de réacteur, laquelle est au moins deux fois plus grande qu'une extension transversale maximale parallèle à la paroi (15) du récipient de réacteur (10).

5. Réacteur (100, 200) selon l'une des revendications précédentes, dans lequel les éléments d'alimentation en courant (41) présentent respectivement une section transversale de câble libre, laquelle, entre le passage mural (15) respectif des éléments d'alimentation en courant (41) et un point de la paroi de l'un ou des plusieurs passages de contact (42) qui est le plus proche du passage mural (15) et avec lequel les éléments d'alimentation en courant (41) respectifs entrent en contact électrique, n'est jamais inférieure à 10 centimètres carrés.

6. Réacteur (100, 200) selon l'une des revendications précédentes, dans lequel les éléments d'alimentation en courant (41), les passages de contact (42) et les sections de tube (21, 22) sont constitués du même matériau ou de matériaux dont les conductivités électriques ne se différencient pas les unes des autres de plus de 50 %.

7. Réacteur (100, 200) selon l'une des revendications précédentes, dans lequel les éléments d'alimentation en courant (41), les passages de contact (32) et les sections de tube (21, 22) sont constitués d'un alliage chrome-nickel-acier contenant de 0,1 à 0,5 % en poids de carbone, de 20 à 50 % en poids de chrome, de 20 à 80 % en poids de nickel, de 0 à 2 % en poids de niobium, de 0 à 3 % en poids de silicium, de 0 à 5 % en poids de tungstène et de 0 à 1 % en poids d'autres composants, les teneurs se complétant respectivement en une fraction non-ferreuse.

8. Réacteur (100, 200) selon l'une des revendications précédentes, dans lequel les sections de tube (21, 22) sont connectées dans l'ensemble ou par groupe de manière électriquement conductrice au moyen d'un ou au moyen de plusieurs éléments de connexion (30) rigides à l'intérieur du récipient de réacteur (10).

9. Réacteur (100) selon l'une des revendications précédentes, dans lequel le ou les tubes de réaction (20) présentent un ou plusieurs coudes en U (23) dans la première zone (11) du récipient de réacteur (10) et les passages de contact (42) dans les ensembles d'alimentation en courant (40) comprennent ou forment le ou les plusieurs coudes en U (23) dans la première zone (11) du récipient de réacteur (10).

10. Réacteur (200) selon l'une des revendications précédentes, dans lequel plusieurs tubes de réaction (22) s'étendent sans coudes en U (23) dans la première zone (11) du récipient de réacteur (10) et les passages de contact (42) dans les ensembles d'alimentation en courant (40) forment des sections de tube rectilignes.

11. Réacteur (100, 200) selon la revendication 9, lequel est conçu en tant que réacteur (100) permettant le vapocraquage, ou selon la revendication 10, lequel est conçu en tant que réacteur (200) permettant le reformage à la vapeur, le reformage à sec ou la déshydrogénation catalytique d'alcanes.

12. Réacteur (100, 200) selon l'une des revendications précédentes, dans lequel les éléments de raccordement flexibles montés en dehors du récipient de réacteur (10) sont constitués d'un autre matériau que les sections en forme de barre (43) des éléments d'alimentation en courant (41) guidés de manière mobile longitudinale dans leurs passages muraux (15) respectifs à travers la paroi (14) du récipient de réacteur (10).

13. Réacteur (100, 200) selon l'une des revendications précédentes, dans lequel la paroi (14), à travers laquelle les sections en forme de barre (43) des éléments d'alimentation en courant (41) sont guidées de manière mobile longitudinalement, est une paroi intermédiaire à un espace séparé, dans lequel les sections en forme de barre entrent en contact avec des éléments de raccordement flexibles, et qui est de son côté délimité au moyen d'une autre paroi ou de plusieurs parois.

14. Procédé pour la réalisation d'une réaction chimique à l'aide d'un réacteur (100, 200), lequel présente un récipient de réacteur (10) et un ou plusieurs tubes de réaction (20), un certain nombre de sections de tube (21, 22) du ou des plusieurs tubes de réaction (20) s'étendant respectivement entre une première zone (11) et une seconde zone (12) dans le récipient de réacteur(10), les sections de tube (21, 22) étant connectées respectivement électriquement dans la première zone (11) aux raccordements électriques (U, V, W) d'une source de courant (50) pour le chauffage des sections de tube (21, 22), un réacteur (100, 200) étant utilisé, dans lequel des ensembles d'alimentation en courant (40) sont fournis dans la première zone (11) du réacteur (100, 200), auxquels une ou un groupe des sections de tube (21, 22) est/sont respectivement connectée(s) électriquement, et qui comprennent respectivement un ou plusieurs passages de contact (42), lequel ou lesquels se raccord(ent) respectivement à au moins une des sections de tube (21, 22) dans la première zone (11), une paroi des passages de contact (42) étant respectivement reliée à un élément d'alimentation en courant (41), lequel présente une section en forme de barre (43), laquelle s'étend par un passage mural (15) à travers une paroi (14) du récipient de réacteur (10), les sections en forme de barre (43) des éléments d'alimentation en courant (41) étant, lors du fonctionnement, guidés respectivement à travers la paroi (14) du récipient de réacteur (10) de manière mobile longitudinalement dans leurs passages muraux (15) respectifs, et les sections en forme de barre (43) des éléments d'alimentation en courant (41) en dehors du récipient de réacteur (10) étant ou pouvant être connectés électriquement au moyen d'éléments de raccordement flexibles aux raccordements électriques (U, V, W) de la source de courant (50).

15. Procédé selon la revendication 14, dans lequel un réacteur selon l'une des revendications 1 à 13 est utilisé.
